# EUROPEAN PATENT APPLICATION

(11) **EP 4 757 480 A1**
(43) Date of publication of application: **10.06.2026**
(21) Application number: 24848930.4
(22) Date of filing: 17.07.2024
(51) Int. Cl.: H04W 72/56, H04W 52/02, H04W 72/0446, H04W 84/12

(54) **COMMUNICATION CONTROL DEVICE, COMMUNICATION CONTROL METHOD, AND COMPUTER PROGRAM**

(30) Priority: 31.07.2023 JP 2023125065
(71) Applicant: Sony Group Corporation, Tokyo 108-0075 (JP)
(72) Inventor: AIO Kosuke, Tokyo 108-0075 (JP); HANDTE Thomas, 70327 Stuttgart (DE); TSUDA Shinichiro, Tokyo 108-0075 (JP); TANAKA Yusuke, Tokyo 108-0075 (JP); SUGAYA Shigeru, Tokyo 108-0075 (JP)
(74) Representative: D Young & Co LLP
(86) International application number: PCT/JP2024/025699
(87) International publication number: WO 2025/028275

(57) **Abstract**

[Object] To realize low power consumption by appropriately setting a priority period for transmitting data.

[Solving Means] A communication control device according to the present disclosure includes: a control unit which controls a communication unit which communicates with a wireless communication device, and the control unit performs control of acquiring, via the communication unit, first information that is transmitted from the wireless communication device and indicates a first period as a priority period during which transmission of a specific type of data is prioritized, acquiring, via the communication unit, second information that is transmitted from the wireless communication device and is used for setting the priority period to a second period shorter than the first period, and setting the priority period to the second period on the basis of the first information and the second information.

## Description

### Technical Field

The present disclosure relates to a communication control device, a communication control method, and a computer program.

### Background Art

In recent years, demand to put next-generation applications such as VR (Virtual Reality), AR (Augmented Reality), and XR (Extended Reality/Cross Reality) to practical use has been increasing year by year. Currently, the most common use case involves a method of connecting a device called a console, which generates video information, and a device which displays the video information (HMD: Head Mount Display) by wires, but wireless kit products that do not require wired cables between the console and the HMD have also been commercialized. It is predicted that the transition to fully wireless communication between the two will accelerate in the future. Furthermore, systems in which a server that performs rendering is present in the local network or on the cloud side, and the generated video information is transmitted to the HMD via a wireless LAN (Local Area Network) access point (AP: Access Point) are also expected to become more common in the future.

Requirements for the wireless communication of HMDs include low-latency transmission of video information and low power consumption of HMDs. As a method for addressing both of the requirements, there is Restricted TWT (R-TWT) adopted in the IEEE802.11be standard. By using R-TWT, it is possible to prevent interruptions from surrounding terminals from occurring by temporarily stopping data transmission to the surrounding terminals during a period when low-latency traffic transmission is required. Furthermore, the HMD device can transition to a sleep mode during periods other than this period. Therefore, it is expected that low-latency transmission and low power consumption can be realized.

### Citation List

### Non-Patent Literature

Non-Patent Literature 1: IEEE802.11-22/0304r0, "Restricted TWT SP Early Termination"

### Disclosure of Invention

### Technical Problem

However, since this function sets cyclic slots at intervals of about 10 ms as an occupancy period for data transmission for each of beacon intervals of 100 to 200 ms, if an arrival time of video information fluctuates, for example, the video information cannot be received at the slot timing, to thus cause a transmission delay. While setting a longer slot time increases the possibility of reception of video information even if the arrival time is delayed, it reduces a time during which the HMD device can transition to the sleep mode, and thus the low power consumption effect is highly likely to be impaired.

To solve the problems described above, the present disclosure aims at realizing low power consumption by appropriately setting a priority period for transmitting data.

### Solution to Problem

A communication control device according to the present disclosure includes: a control unit which controls a communication unit which communicates with a wireless communication device, and the control unit performs control of acquiring, via the communication unit, first information that is transmitted from the wireless communication device and indicates a first period as a priority period during which transmission of a specific type of data is prioritized, acquiring, via the communication unit, second information that is transmitted from the wireless communication device and is used for setting the priority period to a second period shorter than the first period, and setting the priority period to the second period on the basis of the first information and the second information.

### Brief Description of Drawings

[Fig. 1] A diagram showing an example of a system configuration according to a first embodiment of the present disclosure.
[Fig. 2] A block diagram of an AP in the present disclosure.
[Fig. 3] A block diagram of an STA in the present disclosure.
[Fig. 4] A diagram for explaining a general outline of R-TWT (Restricted Target Wake Time).
[Fig. 5] A diagram for explaining problems of R-TWT described in Fig. 4.
[Fig. 6] An overall sequence diagram of the present embodiment.
[Fig. 7] A diagram showing a configuration example of Capability Element used in Association Phase.
[Fig. 8] A diagram showing a configuration example of TWT Element used in Data Tx Phase.
[Fig. 9] A diagram showing a configuration example of TWT Adjustment Info.
[Fig. 10] A diagram showing a configuration example of TWT Change Frame.
[Fig. 11] A diagram showing an exemplary flowchart of an operation of the AP.
[Fig. 12] A diagram showing an exemplary flowchart of an operation of the STA.
[Fig. 13] A diagram showing a first example of a sequence in the first embodiment.
[Fig. 14] A diagram showing a second example of the sequence in the first embodiment.
[Fig. 15] A diagram showing a third example of the sequence in the first embodiment.
[Fig. 16] A diagram showing an example of a system architecture according to a second embodiment.
[Fig. 17] A block diagram showing an example of a rendering device according to the second embodiment.
[Fig. 18] A diagram showing a first example of a sequence in the second embodiment.
[Fig. 19] A diagram showing a second example of the sequence in the second embodiment.
[Fig. 20] A diagram showing a third example of the sequence in the second embodiment.
[Fig. 21] A block diagram showing a configuration example of an AP according to a third embodiment.
[Fig. 22] A block diagram showing a configuration example of an STA in the third embodiment.
[Fig. 23] A block diagram showing a hardware configuration example of a computer that executes a series of processing according to the present disclosure by a program.
[Fig. 24] A block diagram showing a schematic configuration example of a smartphone to which the technology of the present disclosure is applied.
[Fig. 25] A block diagram showing an example of a schematic configuration of an in-vehicle device to which the technology of the present disclosure is applied.
[Fig. 26] A block diagram showing an example of a schematic configuration of a wireless AP to which the technology of the present disclosure is applied.

### Modes for Carrying Out the Invention

Hereinafter, embodiments of the present disclosure will be described with reference to the drawings.

### (First Embodiment)

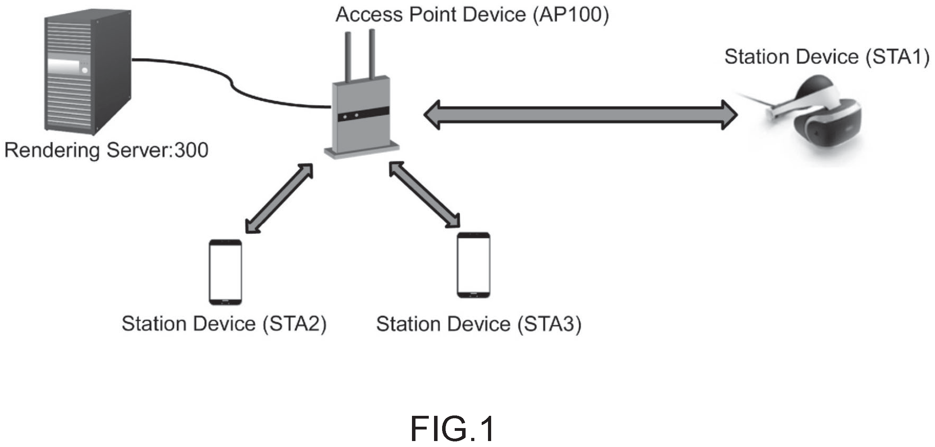

Fig. 1 shows an example of a system configuration according to a first embodiment of the present disclosure.

The present system shown in Fig. 1 includes one AP device (Access Point, base station) 100 and three STA devices (STAtion, child devices) 1, 2, and 3. The present system further includes a rendering server 300 (data generation device) connected to the AP device 100 via a wired backhaul (communications network). All of the three STA devices 1 to 3 are wirelessly connected to the AP 100, thus forming a BSS (Basic Service Set) that exchanges information wirelessly with the AP 100. Hereinafter, the AP device 100 will be referred to as AP 100, and the STA devices 1 to 3 will be referred to as STA 1 to STA 3. In the present embodiment, the STA 1 to STA 3 have the following features.

· The STA 1 is a device (commonly known as a Head Mount Display: HMD) that executes VR/AR/XR applications, and can be worn on a head of a user. The STA 1 feeds back its own position information, which changes in accordance with a movement of the user, to the rendering server 300, and acquires and displays video information generated by the rendering server 300 in accordance with the position information. The STA 1 has a capability to execute functions of the present disclosure to be described later. The rendering server 300 is a data generation device which generates data such as video information and distributes the generated data.
· The STA 2 is a general communication device (smartphone or the like) that performs Internet communication via the AP 100. The STA 2 has a capability to execute the functions of the present disclosure to be described later.
· The STA 3 is a general communication device that performs Internet communication via the AP 100. The STA 2 does not have the capability to execute the functions of the present disclosure to be described later.

The present disclosure is not limited to the system configuration shown in Fig. 1. For example, the number of STAs may be three or more. The STA 1 does not need to be a device of a type that is worn by a user as shown in the figure, and may be a general communication device. Further, the rendering server 300 may be arranged on the cloud side.

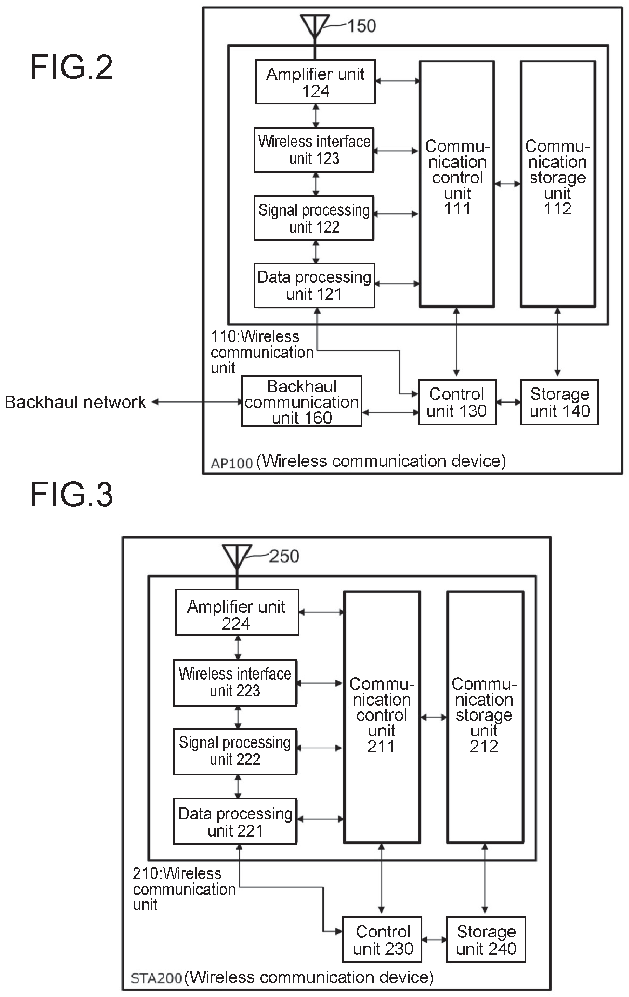

Fig. 2 is a block diagram of the AP 100 according to the present disclosure. The AP 100 mainly includes a wireless communication unit 110, a control unit 130, a storage unit 140, an antenna 150, and a backhaul communication unit 160. It is noted that for operations other than the operations described in the present embodiment, the AP 100 may also perform operations as a wireless LAN base station conforming to the IEEE802.11 standard such as IEEE802.11a/b/g/n/ac/ax/be/bn. For example, the AP 100 may perform an operation that uses CSMA/CA (Carrier Sense Multiple Access with Carrier Avoidance) as a basic access method, and also transmit beacon signals at regular time intervals (periodically).

The wireless communication unit 110 performs wireless communication with the STAs, which are other wireless communication devices (devices each including the wireless communication unit) connected thereto. The wireless communication unit 110 includes a communication control unit 111, a communication storage unit 112, a data processing unit 121, a signal processing unit 122, a wireless interface unit 123, and an amplifier unit 124. The communication unit of the base station according to the present embodiment at least partially includes the functions performed by at least one of the wireless communication unit 110 or the backhaul communication unit 160.

The communication control unit 111 performs control of the operations of the respective units and transmission of information among the respective units. The communication control unit 111 also hands over control information and management information to be notified to the other wireless communication devices to the data processing unit 121.

The communication storage unit 112 retains information to be used by the communication control unit 111. The communication storage unit 112 also retains data (or data packets) to be transmitted and received data (or data packets). A transmission buffer for retaining the data to be transmitted is included in the communication storage unit 112.

During transmission, the data processing unit 121 performs a sequence management of information to be transmitted. The information to be transmitted includes data retained in the communication storage unit 112 and control information and management information received from the communication control unit 111. The data processing unit 121 performs encryption processing and/or the like on the information to be transmitted, then adds a MAC (Media Access Control) header and an error detection code to generate a frame. The data processing unit 121 may also perform processing of concatenating a plurality of frames. During reception, the data processing unit 121 performs MAC header concatenation cancel processing, analysis, and error detection of the received frame. The data processing unit 121 also performs reorder processing in response to a retransmission request. The frame type may be any of a data frame, a management frame, and a control frame.

During transmission, the signal processing unit 122 performs encoding, interleaving, modulation, and the like on the frame, and adds a physical header to generate a symbol stream. During reception, the signal processing unit 122 analyzes the physical header and performs demodulation, deinterleaving, decoding, and the like on the symbol stream to generate a frame. The signal processing unit 122 also performs estimation of complex channel characteristics and spatial separation processing as necessary.

During transmission, the wireless interface unit 123 performs digital-to-analog signal conversion, filtering, up-conversion, and phase control on the symbol stream to generate a transmission signal. During reception, the wireless interface unit 123 performs down-conversion, filtering, and analog-to-digital signal conversion on the received signal to generate a symbol stream.

The amplifier unit 124 amplifies a signal input from the wireless interface unit 123 or the antenna 150. A part of the amplifier unit 124 may be a constituent element outside the communication unit. Alternatively, a part of the amplifier unit 124 may be included in the wireless interface unit 123.

It is noted that although the configuration example of SISO (Single-Input Single-Output) in which one set of the amplifier unit 124 and the antenna 150 is provided is shown herein, a configuration that enables MIMO (Multi-Input Multi-Output) transmission and reception processing by using a plurality of sets of the antenna 150 and the amplifier unit 124 is also possible. Moreover, a configuration including a plurality of sets of the wireless interface unit, the signal processing unit, the data processing unit, and the like so as to enable a plurality of links or a plurality of frequency channels to be operated in parallel is also possible. Details of this configuration will be described in descriptions of a third embodiment.

It is noted that although the wireless communication unit 110 is assumed to be configured by a single IC in the figure, the IC configuration is not limited to this. For example, the wireless interface unit may be configured as a separate IC.

The control unit 130 controls the wireless communication unit 110 and the communication control unit 111. The control unit 130 may also perform some of the operations of the communication control unit 111 in place of the communication control unit 111. Further, the communication control unit 111 and the control unit 130 may be configured as a single block.

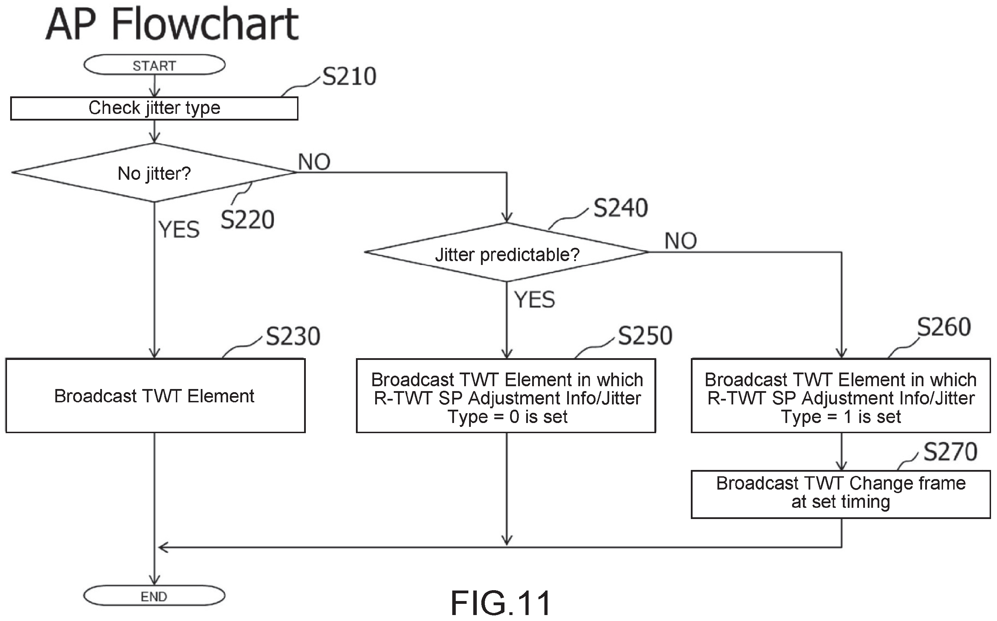

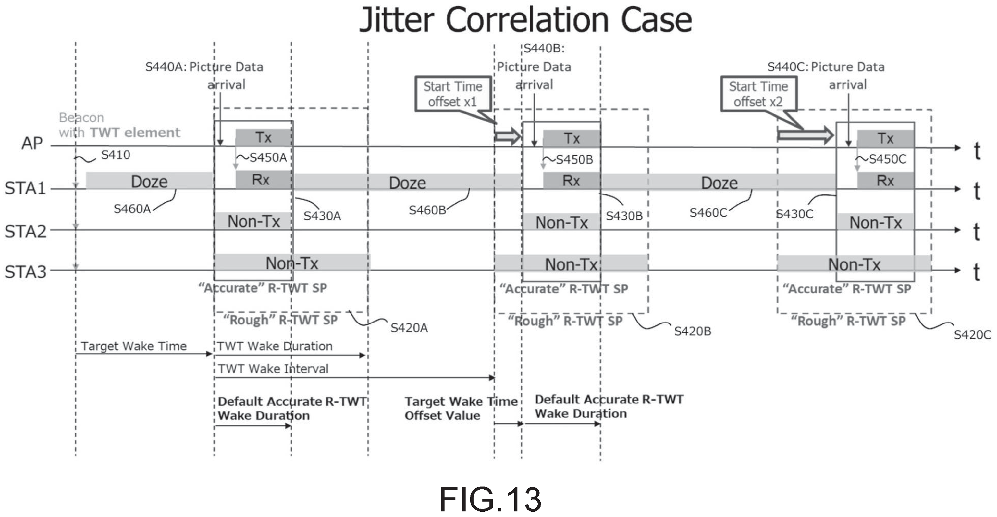

The control unit according to the present embodiment at least partially includes the functions of at least one of the communication control unit 111 or the control unit 130. The control unit controls the wireless communication unit 110 which communicates with the plurality of STAs (wireless communication devices), and performs control of transmitting first information indicating a first period as a priority period for transmitting a specific type (e.g., designated type) of data to the plurality of STAs. The control unit also performs control of transmitting second information used for setting the priority period to a second period shorter than the first period to at least one target wireless communication device (e.g., STA 1) out of the plurality of STAs. The control unit also performs control of information communication related to the setting of the first period and the second period, control of communication within the first period and the second period, control of communication outside the first period and the second period, and the like. Details of the control performed by the control unit will be described later in the sequences (see Figs. 13 to 15) and operation flow (see Fig. 11) of the present disclosure.

The storage unit 140 retains information to be used by the control unit 130 and the wireless communication unit 110. The storage unit 140 may also perform some of the operations of the communication storage unit 112 in place of the communication storage unit 112. The storage unit 140 and the communication storage unit 112 may be configured as a single block.

The backhaul communication unit 160 communicates with other devices via a backhaul network, which is a wired or wireless communication network. The other devices include the rendering server 300. The backhaul communication unit 160 decodes a packet acquired from the backhaul network and hands over the decoded packet to the wireless communication unit 110 via the control unit 130. A format of the packet that is handed over herein may be one in which the IP header remains intact (access point mode) or one in which the IP header has been decoded and removed by the backhaul communication unit 160 (router mode). In the present embodiment, communication with the rendering server 300 is performed via the backhaul communication unit 160, but communication via the wireless communication unit 110 is also possible.

Fig. 3 is a block diagram of the STA 200 according to the present disclosure. The STA 200 corresponds to the STAs 1 and 2 shown in Fig. 1. The STA 3 may have a configuration similar to those of the STAs 1 and 2, but the respective blocks do not have the functions related to the present disclosure. The STA 200 mainly includes a wireless communication unit 210, a control unit 230, a storage unit 240, and an antenna 250. For operations other than the operations described in the present embodiment, the STA 200 may also perform operations as a wireless LAN station conforming to the IEEE802.11 standard such as IEEE802.11a/b/g/n/ac/ax/be/bn. For example, the STA 200 may perform an operation that uses CSMA/CA (Carrier Sense Multiple Access with Carrier Avoidance) as a basic access method.

The wireless communication unit 210 performs processing for performing wireless communication with the AP 100 or other STAs, which are other wireless communication devices (devices each including the wireless communication unit) connected thereto. The wireless communication unit 210 includes a communication control unit 211, a communication storage unit 212, a data processing unit 221, a signal processing unit 222, a wireless interface unit 223, and an amplifier unit 224.

The communication control unit 211 performs control of the operations of the respective units and transmission of information among the respective units. The communication control unit 211 also hands over control information and management information to be notified to the other wireless communication devices to the data processing unit 221.

The communication storage unit 212 retains information to be used by the communication control unit 211. The communication storage unit 212 also retains data (or data packets) to be transmitted and received data (or data packets). A transmission buffer for retaining the data to be transmitted is included in the communication storage unit 212.

During transmission, the data processing unit 221 performs a sequence management of information to be transmitted. The information to be transmitted includes data retained in the communication storage unit 212 and control information and management information received from the communication control unit 211. The data processing unit 221 performs encryption processing and/or the like on the information to be transmitted, then adds a MAC (Media Access Control) header and an error detection code to generate a frame. The data processing unit 221 may also perform processing of concatenating a plurality of frames. During reception, the data processing unit 221 performs MAC header concatenation cancel processing, analysis, and error detection of the received frame. The data processing unit 221 also performs reorder processing in response to a retransmission request. The frame type may be any of a data frame, a management frame, and a control frame.

During transmission, the signal processing unit 222 performs encoding, interleaving, modulation, and the like on the frame, and adds a physical header to generate a symbol stream. During reception, the signal processing unit 222 analyzes the physical header and performs demodulation, deinterleaving, decoding, and the like on the symbol stream to generate a frame. The signal processing unit 222 also performs estimation of complex channel characteristics and spatial separation processing as necessary.

During transmission, the wireless interface unit 223 performs digital-to-analog signal conversion, filtering, up-conversion, and phase control on the symbol stream to generate a transmission signal. During reception, the wireless interface unit 223 performs down-conversion, filtering, and analog-to-digital signal conversion on the received signal to generate a symbol stream.

The amplifier unit 224 amplifies a signal input from the wireless interface unit 223 or the antenna 250. A part of the amplifier unit 224 may be a constituent element outside the communication unit. Alternatively, a part of the amplifier unit 224 may be included in the wireless interface unit 223.

It is noted that although the configuration example of SISO in which one set of the amplifier unit 224 and the antenna 250 is provided is shown herein, a configuration that enables MIMO transmission and reception processing by using a plurality of sets of the antenna 250 and the amplifier unit 224 is also possible. Moreover, a configuration including a plurality of sets of the wireless interface unit, the signal processing unit, the data processing unit, and the like so as to enable a plurality of links or a plurality of frequency channels to be operated in parallel is also possible. Details of this configuration will be described in descriptions of the third embodiment.

It is noted that although the wireless communication unit 210 is assumed to be configured by a single IC in the figure, the IC configuration is not limited to this. For example, the wireless interface unit may be configured as a separate IC.

The control unit 230 controls the wireless communication unit 210 and the communication control unit 211. The control unit 230 may also perform some of the operations of the communication control unit 211 in place of the communication control unit 211. Further, the communication control unit 211 and the control unit 230 may also be configured as a single block.

The control unit according to the present embodiment controls the wireless communication unit 210 which communicates with the AP 100 (wireless communication unit device), and performs control of acquiring first information indicating a first period as a priority period for transmitting a specific type (e.g., designated type) of data from the AP 100 via the wireless communication unit 210, and setting the first period. The control unit also performs control of acquiring second information used for setting a second period shorter than the first period via the wireless communication unit 210, and changing the priority period from the first period to the second period based on the second information and the first information. The control unit also performs control of information communication related to the setting of the first period and the second period, control of communication within the first period and the second period, control of communication outside the first period and the second period, and the like. The priority period for transmitting data may be an occupancy period occupied by data transmission (transmission and reception of other devices are not permitted during this period), or may be a period during which transmission and reception can be performed before other devices (transmission and reception of other devices are permitted during this period, but need to be performed after completion of the transmission or reception of the own device). In the present embodiment, the priority period is assumed to be the occupancy period, though not limited thereto. Details of the control by the control unit will be described later in the sequences (see Figs. 13 to 15) and operation flow (see Fig. 11) of the present disclosure.

The storage unit 240 retains information to be used by the control unit 230 and the wireless communication unit 210. The storage unit 240 may also perform some of the operations of the communication storage unit 212 in place of the communication storage unit 212. The storage unit 240 and the communication storage unit 212 may be configured as a single block.

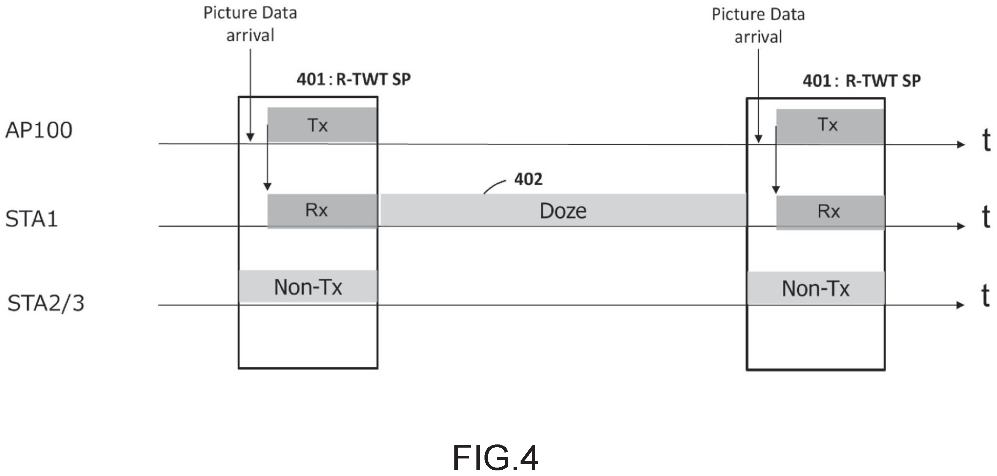

Fig. 4 is a diagram for explaining a general outline of R-TWT (Restricted Target Wake Time) as the related art. R-TWT (Restricted Target Wake Time) will be described using Fig. 4.

R-TWT is a function of setting a service period (SP: Service Period), which is an occupancy period for latency sensitive traffic transmission, as R-TWT SP 401 in the entire BSS, to thus realize low-latency transmission without causing an interruption during the traffic transmission. For example, if the STA 2 or the STA 3 starts uplink transmission right before the AP 100 transmits video information (Picture Data) to the STA 1, the AP 100 needs to wait until the transmission ends, and thus a delay is caused in the transmission of the video information (Picture Data). Further, since the STA 1 does not know when the video information (Picture Data) from the AP 100 will arrive, the STA 1 constantly performs a channel scan and attempts to detect a reception signal, with the result that a certain amount of power consumption is caused even outside the communication period. Furthermore, when either the STA 2 or the STA 3 starts the uplink transmission to the AP 100, the STA 1 starts reception processing even if the signal is not addressed to itself, and thus there is a fear that power consumption will increase.

In this regard, by the AP 100 setting the R-TWT SP 401 for video information (Picture Data) transmission in advance as shown in Fig. 4, it becomes possible to stop the uplink transmission of the STA 2 and the STA 3 during this period, and prevent an interruption from occurring to reduce the transmission delay of the video information (Picture Data) to the STA 1. Furthermore, by the STA 1 transitioning to a low power consumption mode (i.e., at least some of the functions of RF/PHY/MAC are turned off), that is, transitioning to a Doze state 402, during times other than the R-TWT SP 401, power consumption at times other than during communication can be reduced. In this manner, by using the scheduling technology in the BSS, it is possible to address both the low-latency transmission required for the applications such as VR/AR/XR and low power consumption on the HMD side.

Information related to the R-TWT SP is included in a beacon signal broadcast by the AP 100, and an operation in which the R-TWT SPs having the same period length are set at regular intervals during a beacon interval period is being discussed as a general method.

R-TWT is a function currently being designed in IEEE802.11be and is expected to be implemented as Wi-Fi 7, but depending on the usage environment, there may exist legacy terminals that predate Wi-Fi 7. In this case, for example, a method is being considered in which the TWT function, which is a predecessor of R-TWT, is used in conjunction with R-TWT with respect to Wi-Fi 6 (IEEE802.11ax)-compatible terminals, and a Quiet function is used in conjunction with R-TWT with respect to Wi-Fi terminals before that, and/or the like, so as to stop the transmission start during the R-TWT SP period also with respect to the legacy terminals. In the wireless LAN scheduling technology, the presence of such legacy terminals also needs to be taken into account.

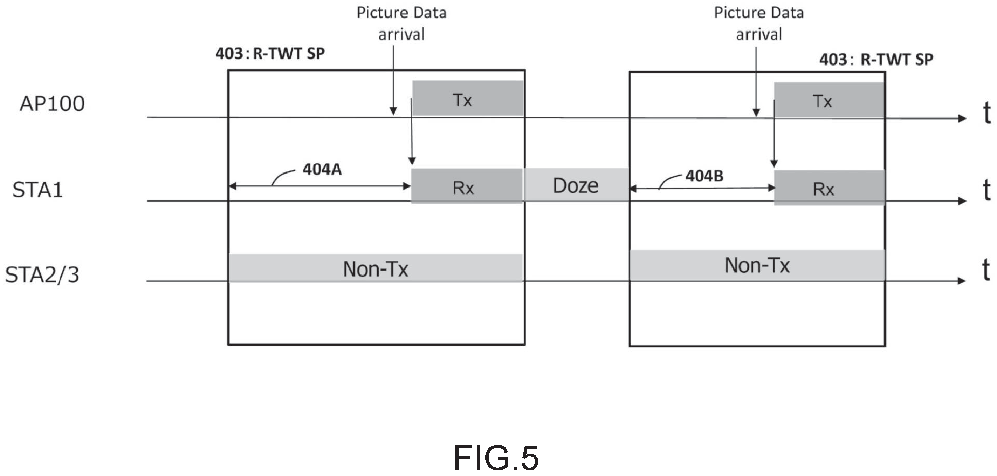

Fig. 5 is a diagram for explaining problems of R-TWT described with reference to Fig. 4.

In Fig. 4, it is presupposed that the video information (Picture Data) arrives at regular time intervals from the rendering server 300 to the AP 100, so there has basically been no problem even when using the R-TWT SPs that have a constant period length and are set at regular intervals. In actuality, in the applications such as VR/AR/XR, video information (Picture Data) is generated at a constant cycle determined by a refresh rate.

However, the arrival time of video information (Picture Data) may not be constant. For example, jitter occurs due to various factors, such as a processing load on the rendering server 300 side, a delay on the backhaul side, and a processing load on a high-order layer (processing unit) of the AP. In this case, if the R-TWT SP is not set to be slightly longer in consideration of the jitter, the video information cannot be received in the R-TWT SP.

In this regard, Non-Patent Literature 1 proposes a method of setting a longer R-TWT SP 403 and ending the R-TWT SP early if the transmission of video information (Picture Data) to the STA 1 is completed early. However, conversely, when the video information (Picture Data) arrives at the AP 100 later than expected, the STA 1 needs to attempt the signal detection by the channel scan for a long time 404A, 404B, and thus the low power consumption effect on the STA 1 side (HMD side) is highly likely to be impaired. In addition, since the STA 2 and the STA 3 also need to stop their own transmission for a long time, there is a fear that an effective throughput will be lowered.

### (General outline of solving means of present disclosure)

In view of the circumstances described above, the AP 100 is provided with a function that enables at least one of a start time or a period length (Duration) (start time/period length) to be adjusted or changed for each R-TWT SP (occupancy period for data transmission). In the existing standard, there is, as a similar function, a "flexible TWT" for flexibly setting the TWT by transmitting a TWT information frame designed in IEEE802.11ax. However, the "flexible TWT" can implement only Individual TWT for setting an individual SP for each STA, and does not support Broadcast TWT like R-TWT. To realize similar functional flexibility with Broadcast TWT, the influence on all STAs in the BSS needs to be taken into account, and an SP adjustment that takes into account the compatibility with terminals prior to IEEE802.11be (Wi-Fi 7) is necessary in particular.

In this regard, the present disclosure provides a method of performing a flexible R-TWT adjustment by using the following features as an example. It is noted that the features of the present disclosure are not limited to those described below.
· The AP 100 notifies of a "Rough R-TWT SP" (first period) which is a rough SP, as the R-TWT SP by TWT Element, and then notifies of an "Accurate R-TWT SP" (second period) obtained by adjusting the "Rough R-TWT SP" to an accurate SP. The "Accurate R-TWT SP" (second period) may be shorter than the "Rough R-TWT SP" (first period), and the "Accurate R-TWT SP" (second period) may be a part of the "Rough R-TWT SP" (first period). The STA that has a capability to adjust this "Rough R-TWT SP" to the "Accurate R-TWT SP" (adjustment function) is called "SP Adjustment-compliant STA", and the STA that does not support this adjustment function is called "non-SP-Adjustment-compliant STA". In the present disclosure, the STA 1 and the STA 2 correspond to the "SP Adjustment-compliant STA", and the STA 3 corresponds to the "non-SP-Adjustment-compliant STA".
· The SP Adjustment-compliant STA is capable of performing the SP adjustment that is based on the method described above, and the non-SP-Adjustment-compliant STA uses the Rough R-TWT SP as the R-TWT SP to perform an R-TWT operation conforming to the 802.11be standard.
· When the non-SP-Adjustment-compliant STA is present in the BSS, the "Accurate R-TWT SP" needs to be surely set within the "Rough R-TWT SP" period.
· The SP adjustment method differs depending on the type of jitter (time lag or fluctuation) in the arrival time of video information.
· When there is a correlation in the jitter of the arrival time (e.g., the jitter is constant and the arrival time of the next video information can be predicted with a certain degree of accuracy), the AP 100 delays a start time of the Rough R-TWT SP a bit at a time (e.g., by a certain amount of time), and sets the delayed Rough R-TWT SP as the Accurate R-TWT SP.
· When there is no correlation in the jitter of the arrival time (e.g., the jitter varies largely and the arrival time of video information cannot be predicted), the AP 100 notifies the STA of the Accurate R-TWT SP in the frame before the start time of the Rough R-TWT SP, to set the Accurate R-TWT SP.

Hereinafter, presupposing the system configuration shown in Fig. 1, details of the embodiment including the R-TWT SP adjustment function according to the present disclosure described above will be described.

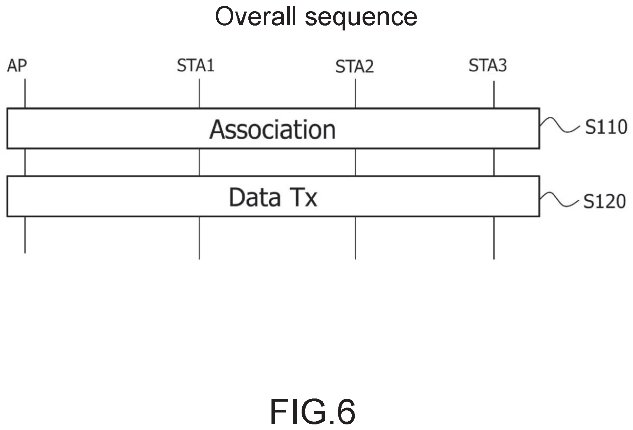

Fig. 6 is an overall sequence diagram of the present embodiment. In the present embodiment, an Association Phase S110 and a Data Tx Phase S120 following the Association Phase are mainly provided.

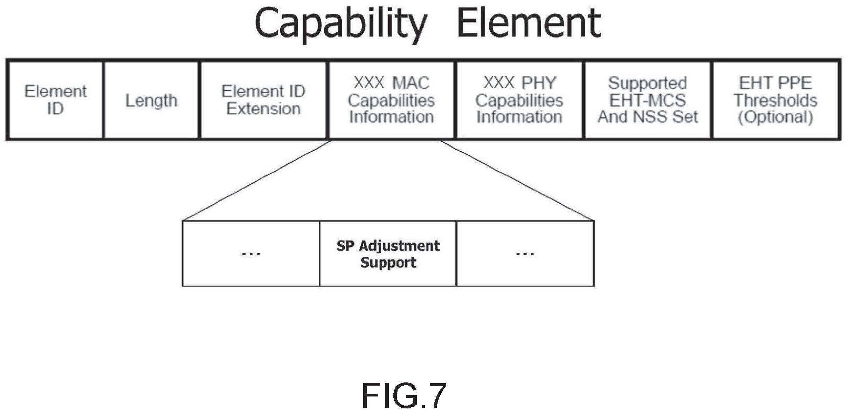

In the Association Phase S110, authentication and connection processing is performed between the AP 100 and the STAs 1 to 3. In this phase, Capability information related to whether or not the "SP Adjustment" is supported is exchanged between the AP 100 and each of the STAs. Details will be described later with reference to Fig. 7.

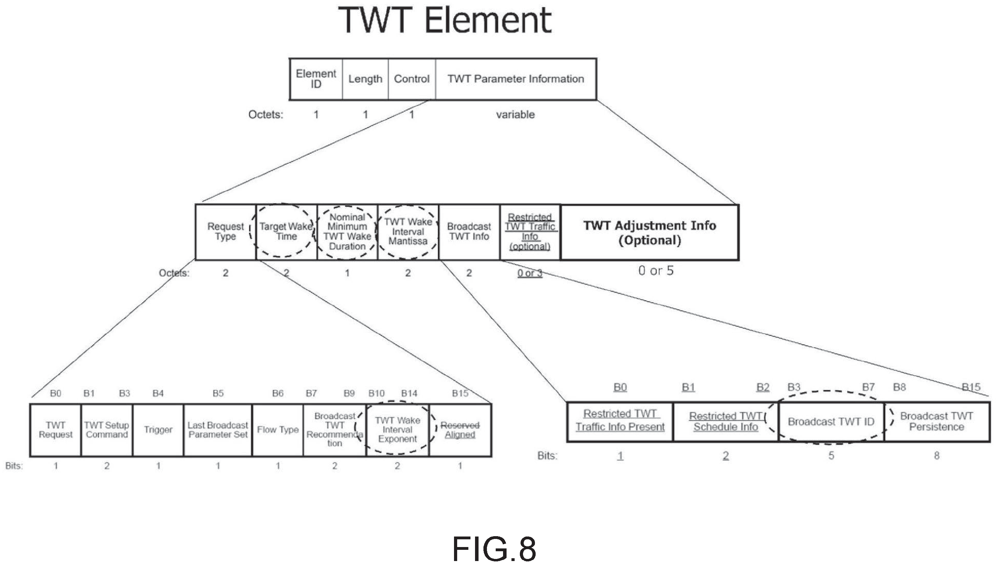

In the Data Tx Phase S120, data is transmitted between the AP 100 and each of the STAs. In this phase, the AP 100 uses a Beacon signal to set the "Rough R-TWT SP" for each of the STAs, and then causes the SP Adjustment-compliant STA to reset the SP from the "Rough R-TWT SP" to the "Accurate R-TWT SP", to thus perform the R-TWT operation. Details will be described later with reference to Fig. 8 and subsequent figures.

Fig. 7 shows a configuration example of Capability Element used in the Association Phase S110. This Element includes flag information of "SP Adjustment Support" in MAC Capabilities Information of Capability Element used for each Version of the IEEE802.11 standard (e.g., HT/HE/EHT or the like). This flag information corresponds to Capability information indicating the fact of being "SP Adjustment"-compliant. It is noted that a Version name of a supported standard is set in "xxx" in the figure. For example, in the 11bn-equivalent standard, "xxx" is expected to be "UHR (Ultra High Reliability)". Being "SP Adjustment"-compliant means having the capability to adjust or change the "Rough R-TWT SP" (first period) to the "Accurate R-TWT SP" (second period).

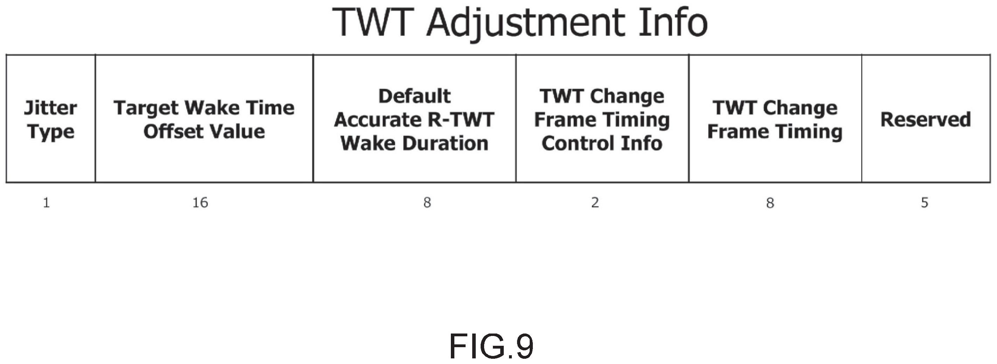

Fig. 8 shows a configuration example of TWT Element used in the Data Tx Phase S120. Here, using TWT Element described in IEEE802.11be D3.0 as a base, "TWT Adjustment Info" is newly incorporated. Whether or not TWT Adjustment Info is included in this Element can be grasped by checking the "Broadcast TWT ID" field in Broadcast TWT Info. Details will be described later. Details of "TWT Adjustment Info" will be described later in Fig. 9. Here, the other fields will be described below.
· Target Wake Interval Exponent of Request Type: exponent information used to calculate an interval between successive R-TWT SPs
· Target Wake Time: time information used to set a period up to the start of the first R-TWT SP
· Nominal Minimum TWT Wake Duration: time information used to set the R-TWT SP period
· TWT Wake Interval Mantissa: base information used to calculate an interval between successive R-TWT SPs
· Broadcast TWT ID of Broadcast TWT Info: identifier information of this TWT processing. If one higher-order bit out of five-bit identification information (Broadcast TWT ID) is "1", it means that "TWT Adjustment Info" follows, that is, R-TWT Adjustment is to be performed.

One of, all of, or any combination of Target Wake Interval Exponent, Target Wake Time, Nominal Minimum TWT Wake Duration, and TWT Wake Interval Mantissa described above corresponds/correspond to an example of first information that instructs the setting of the first period (e.g., R-TWT SP).
· Restricted TWT Traffic Info: information designating a traffic type. As an example, any of 0 to 7 is designated as a traffic ID. The traffic of the type designated herein corresponds to, for example, a specific type of data, or data that requires low-latency transmission.

TWT Adjustment Info included in TWT Element will be described with reference to Fig. 9.

Fig. 9 shows a configuration example of TWT Adjustment Info. It is noted that TWT Adjustment Info does not necessarily need to be included in TWT Element, and may be notified to the STA as a separate Element (in that case, additional information for linking with TWT Element, such as Broadcast TWT ID, becomes necessary). It is noted that the configuration of TWT Adjustment Info is not limited to the configuration shown in Fig. 9 and only needs to include at least a part of the information shown in Fig. 9. Each field of TWT Adjustment Info shown in Fig. 9 will be described below.
· Jitter Type: information related to jitter of the Accurate R-TWT SP start time
   "0" means that jitter is predictable, while "1" means that the jitter is unpredictable. However, the meanings of "0" and "1" may be defined reversely. The jitter being predictable corresponds to a state where a time at which video information can be acquired from the rendering server 300 is predictable (i.e., a time at which acquired video information can be transmitted is predictable). The jitter being unpredictable corresponds to a state where the time at which video information can be acquired from the rendering server 300 is unpredictable (i.e., the time at which acquired video information can be transmitted is unpredictable).
· Target Wake Time Offset Value: time information used when adjusting the Accurate R-TWT SP start time (time information indicating how much the Accurate R-TWT SP start time is to be shifted from the start time of the corresponding R-TWT SP), and corresponds to a reference offset value.
   Used when Jitter Type is "0" (predictable). This reference offset value is cumulatively added to the offset value applied to the previous R-TWT SP (see Fig. 13 to be described later). As a result, when the R-TWT SPs are arranged periodically with intervals in a time direction, the offset value of the Accurate R-TWT SP corresponding to the R-TWT SP (the deviation from the start time of the R-TWT SP) becomes larger along with the progression in the time direction.
· Default Accurate R-TWT Wake Duration: default period information indicating a default period length of the Accurate R-TWT SP
   Used when Jitter Type is "0" (predictable). This default period information corresponds to information of a period length that starts from the time indicated by the offset value.
· TWT Change Frame Timing Control Info: information related to a content of the subsequent TWT Change Frame Timing field
   Used when Jitter Type is "1" (unpredictable).
   If TWT Change Frame Timing Control Info is "0", the TWT Change Frame Timing field indicates information related to a TWT Change Frame transmission timing. This information may be an absolute time or information on how much earlier the frame is to be transmitted, using the Rough R-TWT SP start time as a point of origin (a time counting back from the Rough R-TWT SP start time).
   If TWT Change Frame Timing Control Info is "1", the TWT Change Frame Timing field indicates information identifying another R-TWT SP that becomes a target for transmitting TWT Change Frame (e.g., the R-TWT SP after the next R-TWT SP).
· TWT Change Frame Timing: information related to transmission timing of TWT Change Frame
   If TWT Change Frame Timing Control Info is "0", TWT Change Frame Timing includes time information.
   If TWT Change Frame Timing Control Info is "1", TWT Change Frame Timing includes TWT ID (or information that can identify the R-TWT SP).

At least one of Target Wake Time Offset Value or Default Accurate R-TWT Wake Duration described above corresponds to an example of the first information that instructs the setting of the second period (e.g., Accurate R-TWT SP).

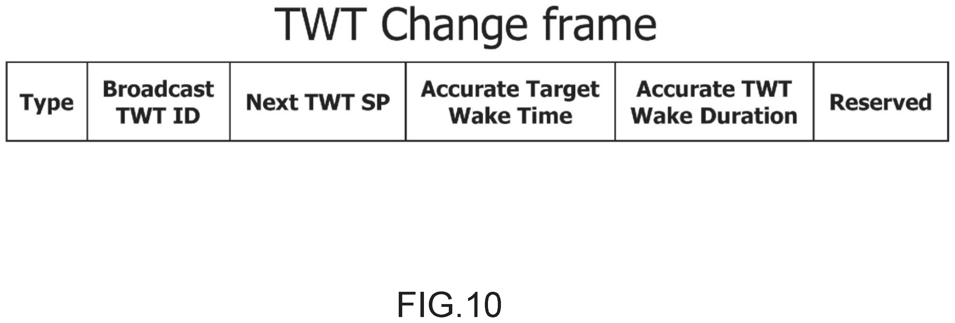

TWT Change Frame will be described with reference to Fig. 10.

Fig. 10 shows a configuration example of TWT Change Frame. Here, a configuration that uses an Action frame of IEEE802.11 as a base is shown, but the configuration of TWT Change Frame is not limited to the configuration shown in Fig. 10 and only needs to include at least a part of the information shown in Fig. 10. Hereinafter, each field of TWT Change Frame shown in Fig. 10 will be described.
· Type: information used to identify which of an "SP adjustment request from AP to STA" or an "SP adjustment request from STA to AP" this frame is.
   In the present embodiment, only the former is used. The latter is used in a second embodiment to be described later.
· Broadcast TWT ID: information used to identify the R-TWT processing to become target of this frame (identifier information of R-TWT processing)
· Next TWT SP: information indicating whether or not to apply to the next R-TWT SP
   For example, the case of "0" indicates an application from the next R-TWT SP. The case of "1" or more indicates what number of the R-TWT SP from the next R-TWT SP the application is to be performed.
· Accurate Target Wake Time: Accurate R-TWT SP start time information
   May be an absolute time or a relative time (adjustment time) that uses any time as a point of origin. Examples of the time as the point of origin include a transmission timing of this frame, a Rough R-TWT SP start time, and the like.
· Accurate TWT Wake Duration: period information indicating a length of the Accurate R-TWT SP

Fig. 11 is a flowchart showing an example of the operation of the AP 100.

First, the AP 100 checks the jitter of the time at which video information (Picture Data) from the rendering server 300 arrives at the AP 100 itself (arrival time jitter) (S210). The AP 100 may estimate the arrival time jitter through learning using AI (Artificial Intelligence) or ML (Machine Learning), or may acquire information on the arrival time jitter from the rendering server 300 or other external devices.

The AP 100 determines whether or not the arrival time jitter is equal to or smaller than a threshold value, and when the arrival time jitter is equal to or smaller than the threshold value, determines that the arrival time jitter is small and is negligible or that there is no jitter (YES in S220). In this case, the AP 100 incorporates TWT Element not including TWT Adjustment Info as an option into a Beacon signal and transmits the Beacon signal, in the format of TWT Element shown in Fig. 8 (S230). That is, the AP 100 incorporates TWT Element into the Beacon signal and transmits the Beacon signal according to the conventional R-TWT processing. After that, the AP 100 transmits the designated traffic, that is, the video information (Picture Data) received from the rendering server 300, according to the R-TWT SP set in the TWT element.

If the arrival time jitter is larger than the threshold value, the AP 100 determines whether or not the arrival time jitter is predictable (correlated) (S240). For example, it is determined as predictable when the arrival time is expected to be delayed by a certain amount each time. It is determined as unpredictable when the delay time is expected to vary largely. When determined as predictable (correlated), the AP 100 broadcasts a Beacon signal in which R-TWT SP Adjustment Info with Jitter Type set to "0" is incorporated into TWT Element to the subordinate STA (S250). The operation of Step S250 corresponds to, for example, a second operation which is an operation of transmitting a third frame including first information indicating a first period as a priority period for preferentially transmitting data and second information used for setting a second period shorter than the first period. After that, the AP 100 adjusts the start time/period length of the Rough R-TWT SP to set an Accurate R-TWT SP. That is, for each SP, the start time is cumulatively increased by the offset value to set an Accurate R-TWT SP. The value of Default Accurate R-TWT Wake Duration is used for all of the period lengths. The designated traffic (Picture Data) is transmitted using the set Accurate R-TWT SP.

When determining that the arrival time jitter is unpredictable (uncorrelated), the AP 100 broadcasts a Beacon signal in which R-TWT SP Adjustment Info with Jitter Type set to "1" is incorporated into TWT Element to the subordinate STA (S260). After that, TWT Change Frame is broadcast at a timing designated in the TWT Change Frame Timing field of R-TWT SP Adjustment Info (S270). After that, the AP 100 transmits the designated traffic (Picture Data) in the Accurate R-TWT SP set by adjusting the start time/period length of the Rough R-TWT SP. Steps S260 and S270 correspond to a first operation which is an operation of transmitting a first frame including first information indicating a first period as a priority period for preferentially transmitting data, and transmitting a second frame including second information used for setting a second period shorter than the first period after transmitting the first frame. In this manner, the AP 100 selectively executes the first operation and the second operation described above in accordance with the determination result of Step S250.

It is noted that the signal into which TWT Element is incorporated is not limited to the Beacon signal, and TWT Element may be incorporated into other broadcast signals.

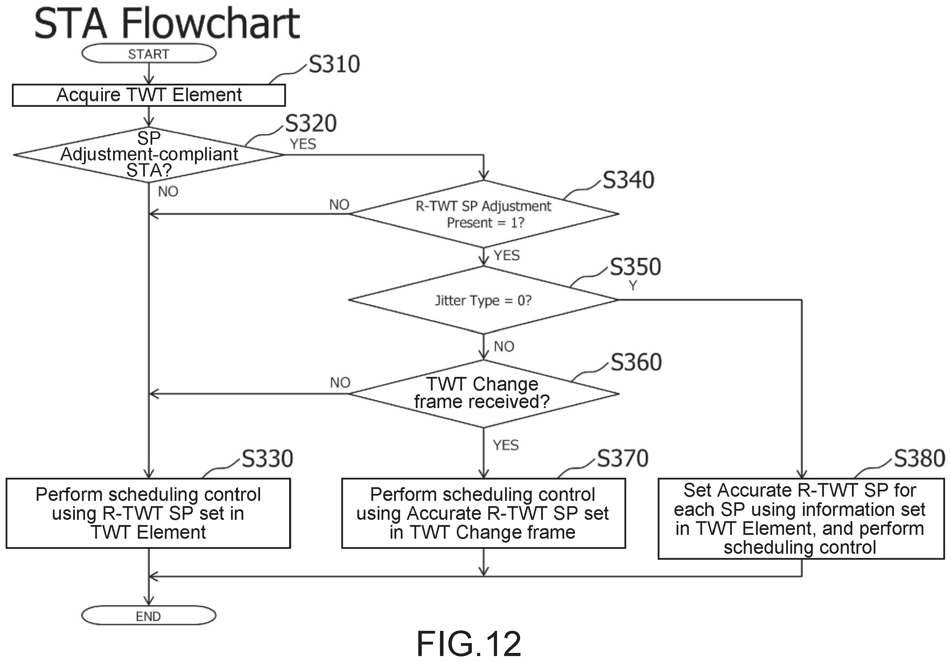

Fig. 12 is a flowchart showing an example of the operation of the STA.

Upon acquiring TWT Element from the Beacon signal received from the AP 100 (S310), the STA first checks the Broadcast TWT ID field of Broadcast TWT Info. When one higher-order bit of this field is "0" (NO in S340) or when the own STA is a non-SP-Adjustment-compliant STA (NO in S320) (i.e., when not having the capability to interpret this field and thus cannot check this field), the STA performs scheduling control using the R-TWT SP set in TWT Element according to the conventional R-TWT processing (S320, S330).

The scheduling control used herein includes the following:
· Always end own uplink transmission before the R-TWT SP start time.
· Do not start transmission of traffic other than the designated traffic during the R-TWT SP period.
· When not performing the traffic transmission outside the R-TWT SP period and not acquiring data from the AP 100, a transition may be made to a low power consumption (Doze) mode (however, prior negotiation with the AP 100 is required).

If the own STA is the SP Adjustment-compliant STA and one higher-order bit of this field is "1" (YES in S340), the STA checks TWT Adjustment Info in TWT Element. When Jitter Type of TWT Adjustment Info is "0" (the SP start time is predictable) (YES in S350), the STA sets, every time the R-TWT SP (Rough R-TWT SP) set in this Element comes, the Accurate R-TWT SP obtained by delaying the start time of the R-TWT SP by "Target Wake Time Offset Value", and performs scheduling control (S380). At this time, the information of the period length (Duration) of the Accurate R-TWT SP is acquired from Default Accurate R-TWT Wake Duration of TWT Adjustment Info.

When Jitter Type is "1" (the arrival time jitter is unpredictable), the STA attempts to receive TWT Change Frame transmitted from the AP 100 at a timing designated in the TWT Change Frame Timing field of TWT Adjustment Info (S360). At this time, in the case of the STA that operates as the low power consumption (Doze) mode during times other than the R-TWT SP, the STA needs to return to the Wake state once at a transmission timing of this frame. When it has been possible to receive this frame normally, the STA adjusts the R-TWT SP to set the Accurate R-TWT SP based on the information stored in this frame, and performs scheduling control using the Accurate R-TWT SP (S370). When the reception of this frame has failed, the STA performs scheduling control using the Rough R-TWT SP (S330).

It is noted that this flowchart is an example, and the STA may transmit Ack in accordance with the success in the reception of TWT Change Frame, for example. Alternatively, the STA may transmit a retransmission request to the AP 100 in accordance with the failure in the reception of TWT Change Frame.

Hereinafter, examples of the sequence according to the present disclosure will be described as Examples 1 to 3.

Fig. 13 shows a first example of the sequence in the first embodiment. Here, a case where Jitter Type is "0" (the SP start time or the arrival time jitter is predictable) is shown.

First, the AP 100 broadcasts a Beacon signal including TWT Element (S410). The Beacon signal transmitted in Step S410 corresponds to an example of a third frame including first information related to the setting of the first period and second information related to the setting of the second period.

The STA 1, the STA 2, and the STA 3 that have acquired TWT Element from the Beacon signal determine, as the first R-TWT SP, a period that continues for TWT Wake Duration (this information is acquired from Nominal Minimum TWT Wake Duration) after an elapse of a time stored in the Target Wake Time field since the time of reception of the Beacon signal (S420A). The next and subsequent R-TWT SPs are set periodically for each TWT Wake Interval (this information is acquired from TWT Wake Interval Mantissa and TWT Wake Interval Exponent) (S420B, S430C). At this time, the STA 1 and the STA 2 that are the SP Adjustment-compliant STAs handle this R-TWT SP as a "Rough R-TWT SP", and the STA 3 that is the non-SP-Adjustment-compliant STA handles the R-TWT SP as the R-TWT SP as per usual.

Next, the AP 100 and the STA 1 and STA 2 that are the SP Adjustment-compliant STAs perform setting of the "Accurate R-TWT SP" (S430A, S430B, S430C). The Accurate R-TWT SP is set using Target Wake Time Offset Value and Default Accurate R-TWT Wake Duration in the TWT Adjustment Info field in Element. Specifically, the AP 100 and the STA 1 and STA 2 set (adjust) a start time of an nth (n is an integer of 1 or more) "Accurate R-TWT SP" counting from after the transmission of the Beacon signal (in the case of the AP 100)/reception of the Beacon signal (in the case of the STA) so that the start time is delayed by Target Wake Time Offset Value*(n-1) from the start time of the Rough R-TWT SP (see "Start Time offset x 1" and "Start Time offset x 2" in the figure). In other words, the offset value increases each time the Rough R-TWT SP progresses in the time direction. Further, the AP 100 and the STA 1 and STA 2 set the value of Default Accurate R-TWT Wake Duration as the period length (Duration) of the Accurate R-TWT SP. The AP 100 and the STA 1 and STA 2 perform scheduling control based on the Accurate R-TWT SP set in this manner.

The AP 100 receives video information that arrives from the rendering server 300 (S440A, S440B, S440C) and transmits the video information to the STA 1 within the Accurate R-TWT SP, and the STA 1 receives the video information from the AP 100 within the same SP and displays the video information (S450A, S450B, S450C).

Further, the STA 1 can also save power consumption by transitioning to the low power consumption mode (Doze state) during times other than the "Accurate R-TWT SP" (S460A, S460B, S460C). It is noted that the STA 1 is in the Wake state when not in the Doze state, and transitioning to the Doze state means transitioning from the Wake state to the Doze state. In other words, the STA 1 may be in the Wake state during the Accurate R-TWT SP, and in the Doze state during at least a part of the period other than the Accurate R-TWT SP. It is noted that the STA 2 can also transition to the low power consumption mode during times other than the "Accurate R-TWT SP".

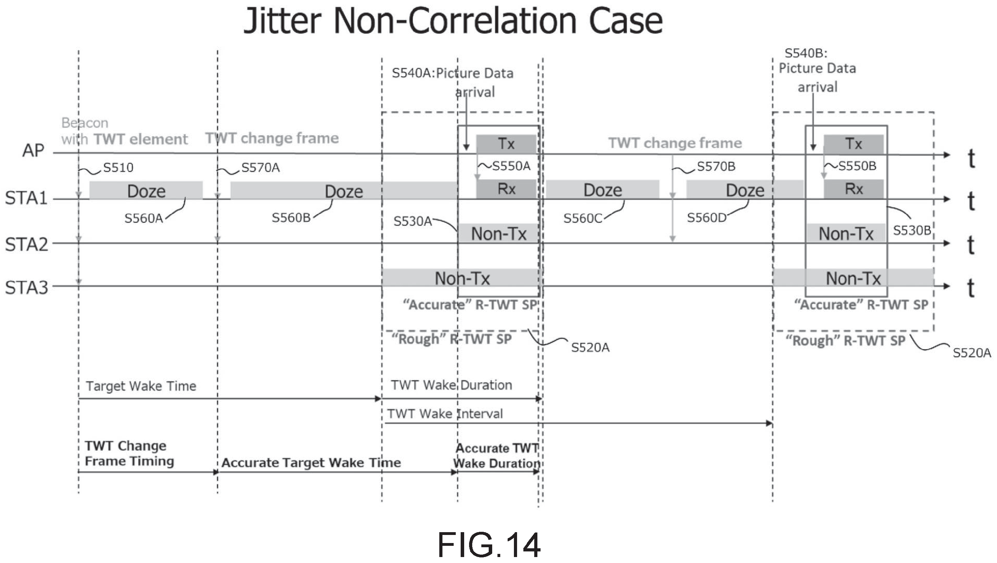

Fig. 14 shows the second example of the sequence in the first embodiment. Here, a case where Jitter Type is "1" (the SP start time is unpredictable) and time information is designated in TWT Change Frame Timing is shown.

The AP 100 broadcasts a Beacon signal including TWT Element (S510). The Beacon signal transmitted in Step S510 corresponds to a first frame including first information related to the setting of the first period. The STA 1, the STA 2, and the STA 3 that have acquired TWT Element from the Beacon signal set the R-TWT SP (the "Rough R-TWT SP" for the SP Adjustment-compliant STAs) by procedures similar to those of the sequence shown in Fig. 13 (S520A, S520B).

After that, the AP 100 broadcasts TWT Change Frame at a timing designated in TWT Element (TWT Change Frame Timing) (S570A, S570B). TWT Change Frame corresponds to a second frame including second information related to the setting of the second period. The AP 100 and the STA 1 and STA 2 that are the SP Adjustment-compliant STAs use an information group included in TWT Change Frame to set the "Accurate R-TWT SP" for each SP (S530A, S530B) and perform scheduling control based on this SP. The start time of the Accurate R-TWT SP to be set is a timing indicated by Accurate Target Wake Time or after an elapse of Accurate Target Wake Time since the transmission(in the case of the AP 100)/reception (in the case of the STA) of TWT Change Frame, and the period length is Accurate TWT Wake Duration.

The AP 100 receives the video information that arrives from the rendering server 300 (S540A, S540B) and transmits the video information to the STA 1 within the Accurate R-TWT SP, and the STA 1 receives the video information from the AP 100 within the same SP and displays the video information (S550A, S550B).

Further, the STA 1 can also save power consumption by transitioning to the low power consumption mode (Doze state) during times other than the Accurate R-TWT SP (S560A, S560B, S560C, S560D). When transitioning to the Doze state, the STA 1 transitions to the Wake state as appropriate during times when necessary operations are performed, such as transitioning to the Wake state when receiving TWT Change Frame. On the other hand, regarding the STA 3 that is the non-SP-Adjustment-compliant STA, scheduling control is performed based on the normal R-TWT SP (which is the same period as the "Rough R-TWT SP" for the SP Adjustment-compliant STAs).

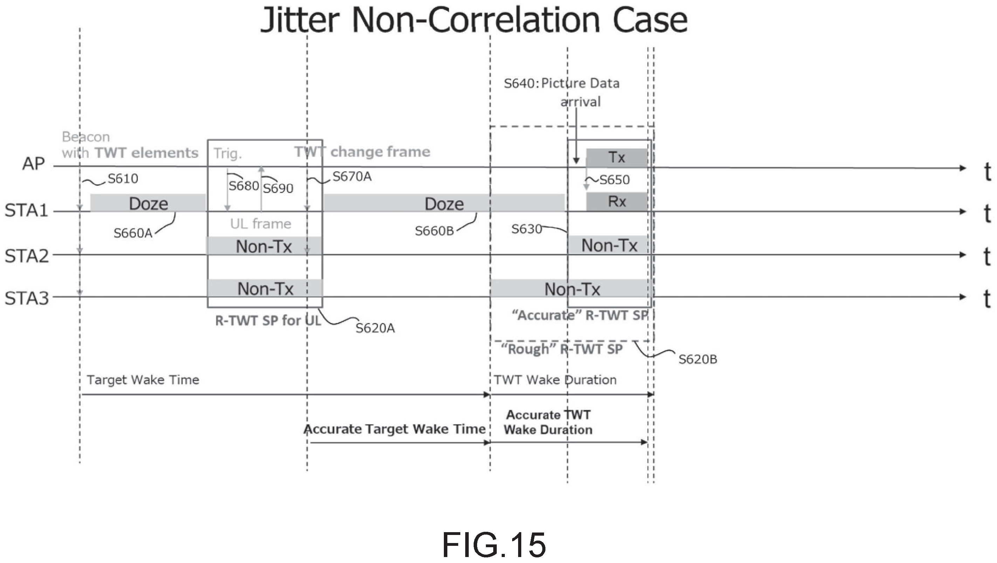

Fig. 15 shows a third example of the sequence in the first embodiment. Here, a case where Jitter Type is "1" (the SP start time or arrival time is unpredictable) and TWT ID is designated in TWT Change Frame Timing is shown.

The AP 100 broadcasts a Beacon signal including TWT Element (S610). The STA 1, the STA 2, and the STA 3 that have acquired TWT Element from the Beacon signal set the R-TWT SP (the "Rough R-TWT SP" for the SP Adjustment-compliant STAs) by procedures similar to those of the first example or the second example of the sequence (S620A, S620B).

After that, the AP 100 broadcasts TWT Change Frame within the R-TWT SP for uplink transmission of the STA 1 set in Step S620A (S670). Before transmitting TWT Change Frame, the AP 100 may transmit a trigger frame to the STA 1 (S680) and receive a response frame including position information and/or the like of the STA 1 from the STA 1 as an uplink frame (S690).

The AP 100 and the STA 1 and STA 2 that are the SP Adjustment-compliant STAs use the information group included in TWT Change Frame to set the Accurate R-TWT SP for each SP (S630), and perform scheduling control based on the set SP.

The AP 100 receives video information that arrives from the rendering server 300 (S640) and transmits the video information to the STA 1 within the Accurate R-TWT SP, and the STA 1 receives the video information from the AP 100 within the SP and displays the video information (S650).

The STA 1 can also save power consumption by transitioning to the low power consumption mode (Doze) during times other than the Accurate R-TWT SP (S660A, S660B). On the other hand, regarding the STA 3 that is the non-SP-Adjustment-compliant STA, scheduling control is performed based on the normal R-TWT SP (the same period as the "Rough R-TWT SP" for the SP Adjustment-compliant STAs).

In a situation where Jitter Type is "1", that is, the arrival time of video information cannot be predicted and the arrival time of video information varies for each SP as shown in the second or third example of the sequence described above, several specific methods for setting the Accurate R-TWT SP by adjusting the R-TWT SP are conceivable.

First, as the simplest example, there is a method in which the AP 100 transmits TWT Change Frame immediately before the start of the Rough R-TWT SP. For example, the AP 100 transmits TWT Change Frame immediately before the start of the Rough R-TWT SP even when the exact arrival time of video information (Picture Data) from the rendering server 300 is unknown, to set the Accurate R-TWT SP. The start time of the Accurate R-TWT SP may be set to coincide with the start time of the Rough R-TWT SP, or a clock time delayed from the start time of the Rough R-TWT SP, taking into account at least an overhead time required for transmission in a case where video information is received in a shortest time possible, may be set as the start time of the Accurate R-TWT SP. Alternatively, when at least the time length during which video information does not arrive is known, a clock time delayed from the start time of the Rough R-TWT SP by an amount of time corresponding to that time length may be set as the start time of the Accurate R-TWT SP. If video information (Picture Data) arrives before the start of the Accurate R-TWT SP, the AP 100 may perform transmission at the Accurate R-TWT SP start time. If there is time remaining after transmitting the video information, the AP 100 may terminate the Accurate R-TWT SP midway.

The start time and end clock time of the Accurate R-TWT SP may be set to coincide with the disclosure clock time and end clock time of the Rough R-TWT SP (i.e., the Accurate R-TWT SP and the Rough R-TWT SP may be set to coincide). In this case, similar to the descriptions above, the AP 100 may terminate the Accurate R-TWT SP/Rough R-TWT SP midway if there is time remaining after the transmission of video information.

If video information (Picture Data) has not arrived from the rendering server 300 immediately before or a certain amount of time before the start of the Accurate R-TWT SP, the AP 100 can delay the start of the Accurate R-TWT SP, which is expected to have a certain effect.

It is noted that a method in which the setting of the Accurate R-TWT SP is omitted is also possible. For example, when the video information (Picture Data) arrives before the start of the Rough R-TWT SP, the AP 100 performs the transmission at the Rough R-TWT SP start time, and terminates the R-TWT SP when there is time remaining after the transmission. If the video information (Picture Data) has not arrived from the rendering server 300 immediately before or a certain amount of time before the start of the Rough R-TWT SP, the AP 100 can delay the start of the R-TWT SP, which is expected to have a certain effect.

Alternatively, the AP 100 may acquire information related to the arrival time of video information (Picture Data) from the rendering server 300 or other external devices for each transmission of video information (Picture Data). For example, when acquiring position information from the STA 1, the rendering server 300 calculates a rough estimate value of a generation completion time of the video information (Picture Data) from an amount of change of a picture included in the generated video information or a load of compression processing and/or the like, and notifies the AP 100 of the estimate value. The AP 100 estimates the arrival time of the video information (Picture Data) based on the notified estimate value of the generation completion time, and determines the Accurate R-TWT SP from the estimated arrival time. Also at this time, for setting the Accurate R-TWT SP that also takes into account the delay on the backhaul side, the AP 100 causes the rendering server 300 to impart a timestamp to a packet notifying of the estimate value of the generation completion time of the video information (Picture Data). The AP 100 uses the timestamp imparted to the stamp of the received packet as a packet transmission time, and determines a difference between the transmission time and the packet reception time as the delay on the backhaul side. The arrival time of the video information is estimated based on this delay on the backhaul side and the estimate value of the generation completion time, and thus the Accurate R-TWT SP is determined. Details of the supported standards and/or protocols for the frames exchanged between the AP 100 and the rendering server 300 are not limited to particular ones.

As described above, according to the present embodiment, the AP 100 can flexibly set an R-TWT SP that takes into account the arrival time jitter of video information (Picture Data). In other words, by setting a longer R-TWT SP as the Rough R-TWT SP and flexibly setting a shorter Accurate R-TWT SP within the Rough R-TWT SP while taking into account the arrival time jitter, it becomes possible to efficiently use times other than the Accurate R-TWT SP by transitioning to the low power consumption mode, by performing transmission of data other than the low-latency traffic, and the like, even within the Rough R-TWT SP. In other words, even within the Rough R-TWT SP, there is no need to wait during times other than the Accurate R-TWT SP, so efficient operations become possible, and low latency and low power consumption can both be realized. At this time, regarding the non-SP-Adjustment-compliant STA (the STA 3 in the present embodiment), it is also possible to prevent an interruption by the non-SP-Adjustment-compliant STA from occurring when video information is transmitted to the STA 1. However, there is a fear that since scheduling control that uses a longer R-TWT SP is performed for the non-SP-Adjustment-compliant STA, efficiency will be lowered. In this regard, for example, the AP 100 may introduce a mechanism to eliminate the unfairness of the STA 3 even a little by actively inducing uplink transmission of the STA 3 during times other than the Accurate R-TWT SP within the Rough R-TWT SP or during times other than the Rough R-TWT SP, and/or the like.

In the first embodiment described above, the first period is set as the priority period based on the first information, and then the priority period is adjusted from the first period to the second period based on the second information. However, it is also possible to omit the setting of the first period and set the second period directly from the first information and the second information. Thus, it becomes possible to reduce the amount of information transmitted and received to/from the STA 1 or a frequency thereof, and efficiently set the second period.

### (Second Embodiment)

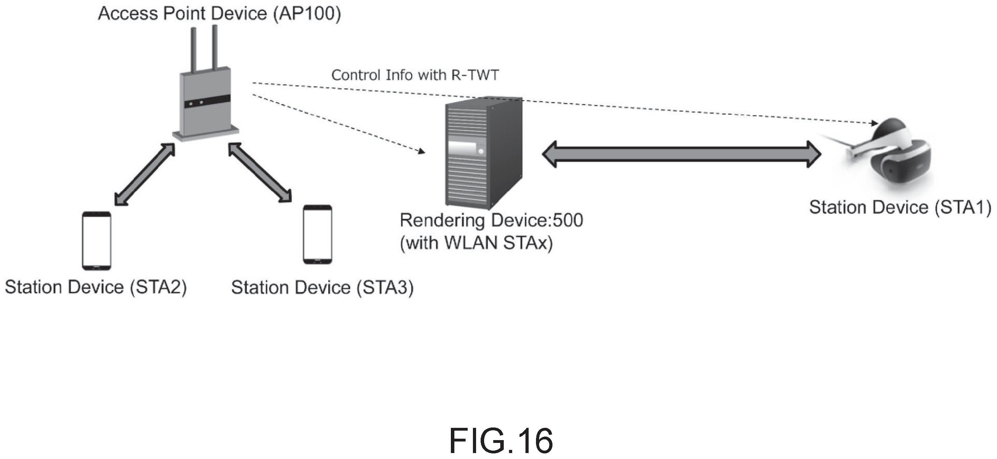

Fig. 16 shows an example of a system architecture according to the second embodiment. In the first embodiment, the rendering server 300 and the STA 1 communicate via the AP 100. In the second embodiment, a rendering device 500 and the STA 1 communicate directly, and the AP 100, the STA 2, and the STA 3 are present in the periphery. The rendering device 500 includes a wireless control unit (STAx) for communicating with the AP 100 and the STA 1. The STA 1, the STA 2, and the STA 3 are assumed to be the same as in the first embodiment (see Fig. 1). That is, the STA 1 is an HMD, and the STA 2 is a general communication device such as a smartphone, each of the STA 1 and the STA 2 having the capability to execute the functions according to the present disclosure. Further, the STA 3 is a general communication device that performs Internet communication via the AP 100 and does not have the capability to execute the functions according to the present disclosure.

Similar to the first embodiment, by using R-TWT in the transmission of video information (Picture Data) from the rendering device 500 to the STA 1, low-latency transmission and low power consumption are realized while preventing an interruption by other communication from occurring. The STAx and the STA 1 have a connection relationship with the AP 100. Between the STAx and the STA 1, a setting that enables P2P communication is made by TDLS (Tunneled Direct Link Setup) conforming to the IEEE802.11 standard. Similar to the first embodiment, the STA group as a subordinate of the AP 100 reference TWT Element broadcast from the AP 100, set the R-TWT SP, and perform scheduling control.

A major difference from the first embodiment is that it is the rendering device 500 or the STAx, instead of the AP 100, that grasps the information related to the arrival time of video information (Picture Data) (the jitter type and/or the generation or arrival time of each piece of video information). Therefore, the AP 100 needs to determine the method of adjusting the R-TWT SP (Rough R-TWT SP) to the Accurate R-TWT SP and the start time/period length of the Accurate R-TWT SP based on the information from the STAx of the rendering device 500.

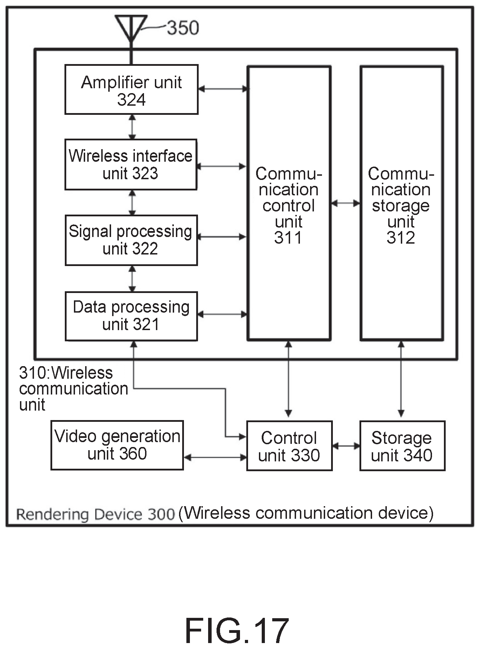

Fig. 17 is a block diagram showing an example of the rendering device 500 according to the second embodiment. The rendering device 500 mainly includes a wireless communication unit 310, a control unit 330, a storage unit 340, an antenna 350, and a video generation unit 360.

The wireless communication unit 310 performs processing for performing wireless communication with the AP 100 or other STAs, which are other wireless communication devices (devices each including a wireless communication unit) connected thereto. The wireless communication unit 310 includes a communication control unit 311, a communication storage unit 312, a data processing unit 321, a signal processing unit 322, a wireless interface unit 323, and an amplifier unit 324.

The video generation unit 360 generates video information to be transmitted to the STA 2 based on information acquired from the control unit 330. The main processing is rendering processing, compression processing, and/or the like. While the present embodiment mainly handles video information, the present disclosure is not limited to this, and other types of information may be generated by an application.

Other configurations and operations are omitted since they are the same as the elements with the same names in the STA block diagram of Fig. 3. It is noted that the rendering device 500 may alternatively include a plurality of wireless communication units for communicating with each of the AP 100 and the STA 1. Alternatively, the rendering device 500 may be provided with a connection destination that differs for each link (AP 100 and STA 1) using a multi-link configuration in a single wireless communication unit.

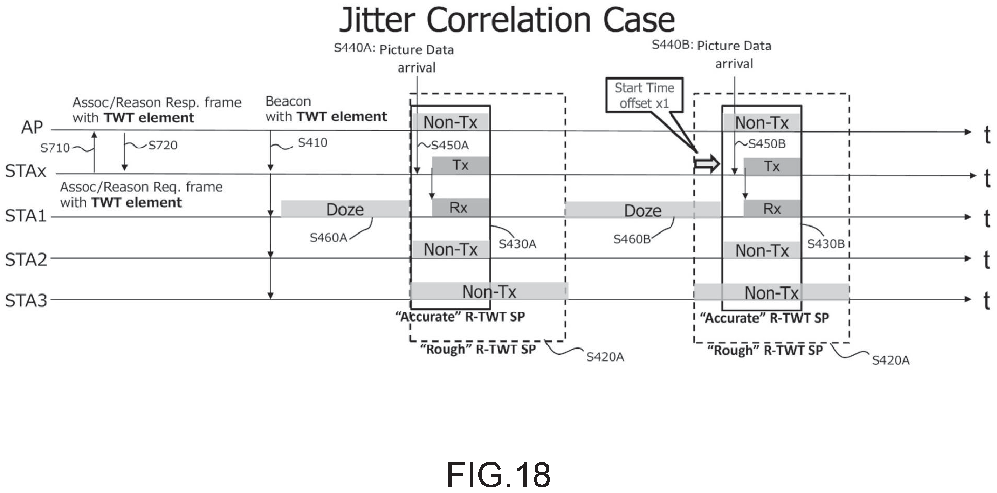

Fig. 18 shows a first example of the sequence in the second embodiment. Here, a case where Jitter Type is "1" (the SP start time or arrival time jitter is predictable) is shown.

The difference from the first example of the sequence in the first embodiment (see Fig. 13) is that TWT Element is incorporated into each of an Association frame and a ReAssociation frame for information exchange, for performing a negotiation related to the SP Adjustment in advance between the AP 100 and the STAx. The request/response/rejection and the like related to this negotiation are already defined in IEEE802.11-2020 and can be designated in the Request Type field shown in Fig. 8. The STAx stores arrival time jitter information related to video information (Picture Data) in the field in TWT Adjustment Info (e.g., Jitter Type field) shown in Fig. 9, and transmits a request signal that requests the setting of the Rough R-TWT SP and the Accurate R-TWT SP to the AP 100 (S710), and the AP 100 transmits a response signal indicating OK or NG (S720). This request signal includes a first request signal that requests the setting of the Rough R-TWT SP and a second request signal that requests the setting of the Accurate R-TWT SP. This exchange may be performed a plurality of times. Since the subsequent sequence is the same as that shown in Fig. 13 except that the subject that transmits video information to the STA 1 is the STAx instead of the AP 100, the same reference numerals are used in the equivalent sequence, and descriptions thereof will be omitted.

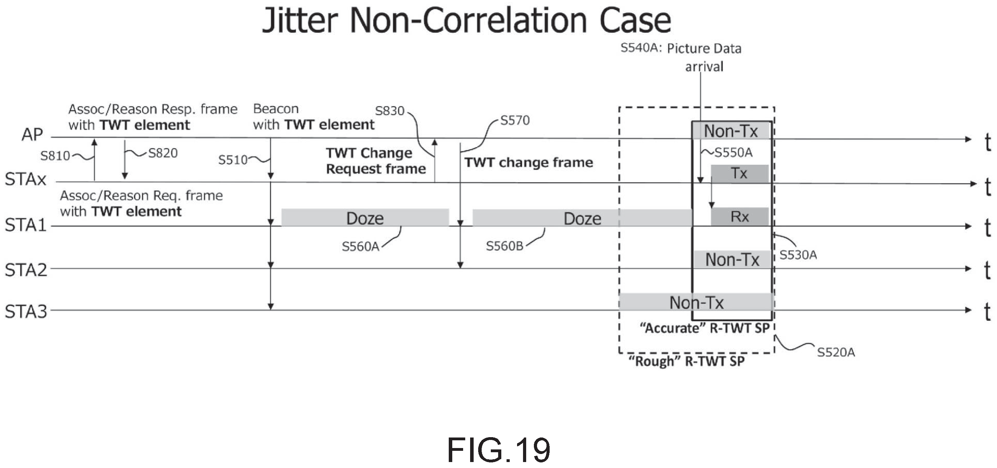

Fig. 19 shows a second example of the sequence in the second embodiment. Here, a case where Jitter Type is "1" (the SP start time or the arrival time jitter is unpredictable) and time information is designated in TWT Change Frame Timing is shown.

Similar to the sequence shown in Fig. 18, this sequence differs from the second example of the sequence in the first embodiment (see Fig. 14) in that the AP 100 and the STAx perform the negotiation related to the setting of the Rough R-TWT SP in advance (S810, S820). While a request signal that requests the setting of the Rough R-TWT SP and the Accurate R-TWT SP (corresponding to both the first request signal and the second request signal) has been transmitted in Step S710 of Fig. 18, a request signal that requests the setting of the Rough R-TWT SP (first request signal) is transmitted in Step S810 of this sequence. After this, the STAx transmits a TWT Change Request frame (S830). The TWT Change Request frame corresponds to the second request signal that requests the setting of the Accurate R-TWT SP. The TWT Change Request frame is defined and used by setting a predetermined value (a value that identifies that the request is an SP adjustment request from the STA to the AP or a value indicating that the frame is a TWT Change Request frame) in the Type field of TWT Change Frame shown in Fig. 10. The TWT Change Request frame includes a content of TWT Change Frame to be broadcast by the AP 100. The TWT Change Request frame only needs to be notified before the transmission timing indicated by TWT Change Frame Timing of TWT Element. The AP 100 may induce the STAx to transmit the TWT Change Request frame using a Trigger frame (not shown), or the STAx may transmit the TWT Change Request frame at a timing at which the transmission right is obtained by carrier sense that is based on CSMA/CA. Since the rest of the sequence is the same as that shown in Fig. 14 except that the subject that transmits video information to the STA 1 is the STAx instead of the AP 100, the same reference numerals are used in the sequence equivalent to that of Fig. 14, and descriptions thereof will be omitted.

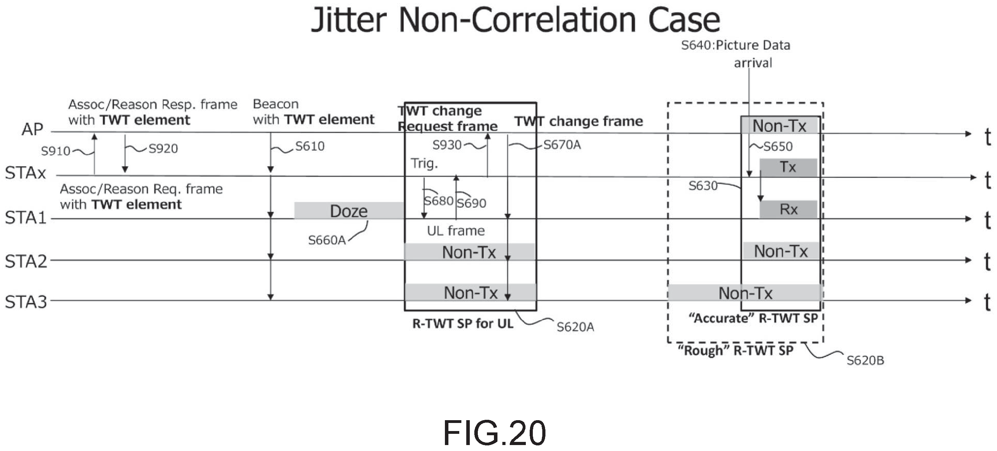

Fig. 20 shows a third example of the sequence in the second embodiment. Here, a case where Jitter Type is "1" (the SP start time or the arrival time jitter is unpredictable) and TWT ID is designated in TWT Change Frame Timing is shown.

Similar to the sequence shown in Fig. 19, this sequence differs from the third example of the sequence in the first embodiment (see Fig. 15) in that the AP 100 and the STAx perform the negotiation related to the setting of the Rough R-TWT SP in advance (S910, S920), and further, the STAx transmits the TWT Change Request frame (S930). In Step S910 of this sequence, a request signal that requests the setting of the Rough R-TWT SP (first request signal) is transmitted. The TWT Change Request frame transmitted in Step S930 corresponds to the second request signal that requests the setting of the Accurate R-TWT SP. Since the rest of the sequence is the same as that shown in Fig. 19 except that the subject that transmits video information to the STA 1 is the STAx instead of the AP 100, the same reference numerals are used in the sequence equivalent to that of Fig. 19, and descriptions thereof will be omitted.

### (Third Embodiment)

The first and second embodiments have assumed the case where the AP 100 and the STA 200 each include only one set of the data processing unit, the signal processing unit, the wireless interface unit, the amplifier unit, and the antenna 150, to perform single link communication. As another configuration example, as described in the first embodiment, this set may be provided plurally so that the AP 100 and the STA 200 each have a configuration for performing wireless communication that uses a plurality of links (Multi Link Operation: MLO) (multi-link configuration). An AP having a multi-link configuration may be referred to as an MLD (Multi Link Device: ML) AP, and an STA having a multi-link configuration may be referred to as an MLD STA. Of the STAs 1 to 3, the STA 1 (target wireless communication device) may be the MLD STA, and the STA 2 and the STA 3 may be STAs that are not the MLD STAs. Alternatively, all of the STAs 1 to 3 may be the MLD STAs.

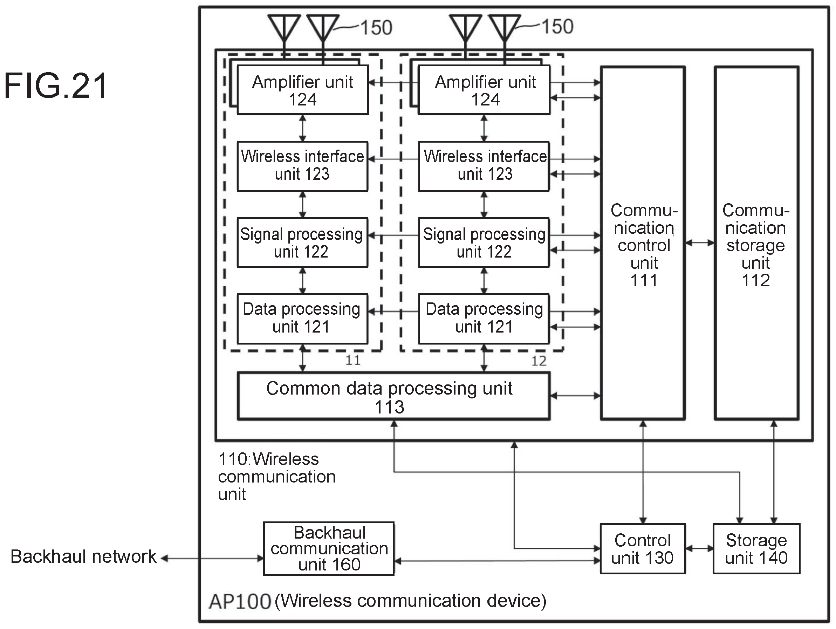

Fig. 21 is a block diagram of the AP 100 having the multi-link configuration. The wireless communication unit 110 of the AP 100 shown in Fig. 21 includes a plurality of sets of the data processing unit 121, the signal processing unit 122, the wireless interface unit 123, the amplifier unit 124, and the antenna 150, and each set will be referred to as an AP entity. In the example shown in the figure, an AP entity 11 and an AP entity 12 are provided. The AP entities 11 and 12 independently perform processing of the MAC layer and below, that is related to the AP, and establish separate links with the STA 200 to perform communication.

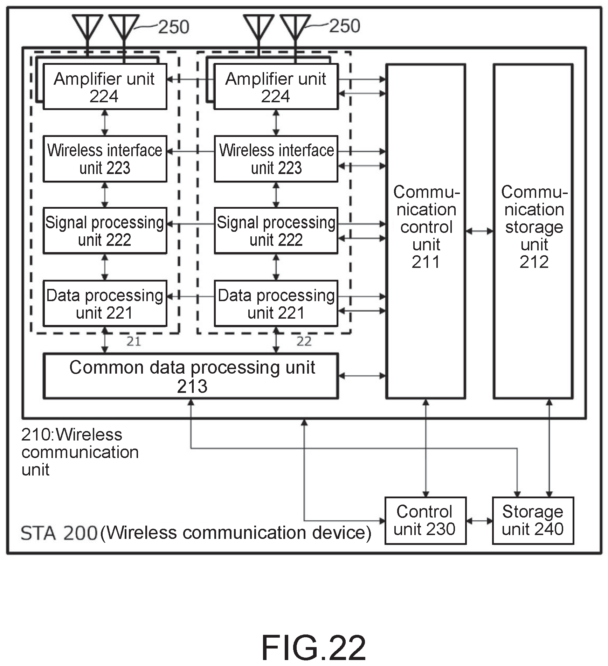

Fig. 22 is a block diagram of the STA 200 having the multi-link configuration. The wireless communication unit 210 of the STA 200 shown in Fig. 22 includes a plurality of sets of the data processing unit 221, the signal processing unit 222, the wireless interface unit 223, the amplifier unit 224, and the antenna 250, and each set will be referred to as an STA entity. In the example shown in the figure, an STA entity 21 and an STA entity 22 are provided.

The AP entity 11 of the AP 100 is connected to the STA entity 21 of the STA 200 via a first link out of the plurality of links, and performs processing related to the first link. The AP entity 12 of the AP 100 is connected to the STA entity 22 of the STA 200 via a second link out of the plurality of links, and performs processing related to the second link. With such a configuration, the AP 100 and the STA 200 can perform communication using the plurality of links at the same time or in parallel. The AP 100 only needs to connect to the STA that is not the MLD STA via one of the first link or the second link (the first link in the present example).

For example, the link for information transmitted and received between the AP 100 and the STA 200, that has been described in the first embodiment, may differ for each type of information. For example, the first information indicating the first period as the priority period for preferentially transmitting data may be transmitted and received via the first link, and the second information used for setting the second period shorter than the first period may be transmitted and received via the second link. Alternatively, one of the first information or the second information may be transmitted and received via the first link or the second link, and the other one of the first information or the second information may be transmitted and received via both of the first link and the second link. Both of the first information and the second information may alternatively be transmitted and received via both of the first link and the second link. By the transmission and reception via both of the first link and the second link, the possibility of the STA correctly receiving the information can be raised. Furthermore, the first link or the second link having higher communication quality may be selected and used for transmission of the first information or the second information. Thus, it is possible to cause the STA to more reliably receive the first information and the second information.

Similar to the AP 100 and the STA 200, the rendering device 300 in the second embodiment may also have a multi-link configuration. The block diagram in this case may be similar to that shown in Fig. 21 or 22. The rendering device 300 having the multi-link configuration may communicate with the STA 200 (STA 1) using one of the plurality of links and communicate with the AP 100 using another one of the links. The rendering device 300 having the multi-link configuration may determine the link to use in accordance with the type of information to be transmitted or received, and transmit or receive information via the determined link.

### <Configuration example of computer>

The series of processing described above can be executed by hardware or can be executed by software. When the series of processing is executed by software, a program configuring the software is installed in a computer incorporated into dedicated hardware, a general-purpose personal computer, or the like from a program recording medium.

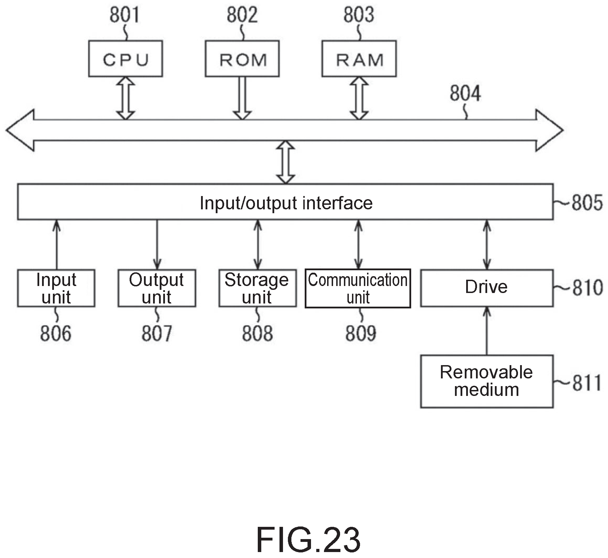

Fig. 23 is a block diagram showing a hardware configuration example of a computer that executes the series of processing described above by a program.

A CPU (Central Processing Unit) 801, a ROM (Read Only Memory) 802, and a RAM (Random Access Memory) 803 are mutually connected via a bus 804.

An input/output interface 805 is also connected to the bus 804. Connected to the input/output interface 805 are an input unit 806 constituted of a keyboard, a mouse, and the like, and an output unit 807 constituted of a display, a speaker, and the like. Also connected to the input/output interface 805 are a storage unit 808 constituted of a hard disk, a nonvolatile memory, and/or the like, a communication unit 809 constituted of a network interface and/or the like, and a drive 810 that drives a removable medium 811.

In the computer configured as described above, the CPU 801 loads a program stored in the storage unit 808 into the RAM 803 via the input/output interface 805 and the bus 804 and executes it, to carry out the series of processing described above, for example.

The program executed by the CPU 801 is recorded onto the removable medium 811 or provided via wired or wireless transmission media such as a local area network, the Internet, and digital broadcasting to be installed in the storage unit 808, for example.

It is noted that the program executed by the computer may be a program in which the processing is executed in time series in the order described in the present specification, or may be a program in which the processing is executed in parallel or at necessary timings, such as when invoked.

### <Application example>

The present technology can be applied to various products. For example, the base station (wireless communication device) 100 shown in Fig. 2, the terminal device (wireless communication device) 200 shown in Fig. 3, and the rendering device 300 (wireless communication device) shown in Fig. 17 may be realized as: a mobile terminal such as a smartphone, a tablet PC (Personal Computer), a laptop PC, a portable game terminal, or a digital camera; a fixed terminal such as a television receiver, a printer, a digital scanner, or a network storage; or an in-vehicle terminal such as a car navigation system. Alternatively, the base station (wireless communication device) 100, the terminal device (wireless communication device) 200, and the rendering device 300 (wireless communication device) may be realized as an M2M (Machine to Machine Communication) terminal such as a smart meter, a vending machine, a remote monitoring device, or a POS (Point of Sale) terminal. Furthermore, the base station (wireless communication device) 100, the terminal device (wireless communication device) 200, and the rendering device 300 (wireless communication device) may be a wireless communication module (e.g., an integrated circuit module constituted of a single die) mounted on these terminals.

On the other hand, for example, the base station (wireless communication device) 100, the terminal device (wireless communication device) 200, and the rendering device 300 (wireless communication device) may be realized as a wireless LAN AP (wireless base station) with or without a router function. Alternatively, the base station (wireless communication device) 100, the terminal device (wireless communication device) 200, and the rendering device 300 (wireless communication device) may be realized as a mobile wireless LAN router. Furthermore, the base station (wireless communication device) 100, the terminal device (wireless communication device) 200, and the rendering device 300 (wireless communication device) may be a wireless communication module (e.g., an integrated circuit module constituted of a single die) mounted on these devices.

### <Configuration example of smartphone>

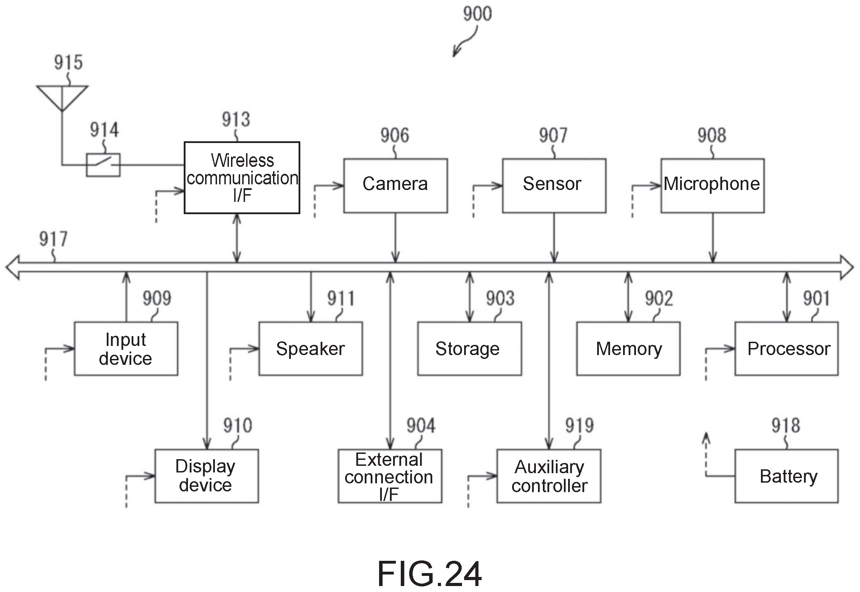

Fig. 24 is a block diagram showing a schematic configuration example of a smartphone to which the present technology is applied.

The smartphone 900 includes a processor 901, a memory 902, a storage 903, an external connection interface 904, a camera 906, a sensor 907, a microphone 908, an input device 909, and a display device 910. The smartphone 900 also includes a speaker 911, a wireless communication interface 913, an antenna switch 914, an antenna 915, a bus 917, a battery 918, and an auxiliary controller 919.

The processor 901 may be, for example, a CPU or a SoC (System on Chip), and restricts the functions of the application layer and other layers of the smartphone 900.

The memory 902 includes a RAM and a ROM and stores programs to be executed by the processor 901 and data.

The storage 903 includes a storage medium such as a semiconductor memory or a hard disk.

The external connection interface 904 is an interface for connecting an external device such as a memory card or a USB (Universal Serial Bus) device to the smartphone 900.

The camera 906 includes an image pickup element such as a CCD (Charge Coupled Device) or a CMOS (Complementary Metal Oxide Semiconductor), and generates a captured image.

The sensor 907 includes, for example, a sensor group including a positioning sensor, a gyro sensor, a geomagnetic sensor, an acceleration sensor, and the like.

The microphone 908 converts audio input to the smartphone 900 into an audio signal.

The input device 909 includes, for example, a touch sensor that detects a touch on a screen of the display device 910, a keypad, a keyboard, a button, a switch, or the like, and accepts operations or information input from the user.

The display device 910 includes a screen such as a liquid crystal display (LCD) or an organic light-emitting diode (OLED) display, and displays an output image of the smartphone 900. The speaker 911 converts an audio signal output from the smartphone 900 into audio.

The wireless communication interface 913 supports one or more wireless LAN standards such as IEEE802.11a, 11b, 11g, 11ac, 11ad, 11ax, 11ay, 11be, and 11bn, and executes wireless communication.

The wireless communication interface 913 communicates with other devices via the wireless LAN AP in an infrastructure mode. In addition, the wireless communication interface 913 directly communicates with other devices in an ad hoc mode or a direct communication mode such as Wi-Fi Direct.

It is noted that although one of the two terminals operates as an AP in Wi-Fi Direct unlike the ad hoc mode, communication is carried out directly between those terminals.

The wireless communication interface 913 typically includes a baseband processor, an RF (Radio Frequency) circuit, a power amplifier, and the like. The wireless communication interface 913 may be a one-chip module in which a memory that stores a communication control program, a processor that executes the program, and related circuits are integrated.

In addition to the wireless LAN system, the wireless communication interface 913 may support other types of wireless communication systems such as a near field communication system, a close-proximity wireless communication system, and a cellular communication system.

The antenna switch 914 switches a connection destination of the antenna 915 between a plurality of circuits (e.g., circuits for different wireless communication systems) included in the wireless communication interface 913.

The antenna 915 includes one or a plurality of antenna elements (e.g., a plurality of antenna elements constituting a MIMO (Multiple Input Multiple Output) antenna), and is used for transmission and reception of radio signals by the wireless communication interface 913.

It is noted that the smartphone 900 is not limited to the example shown in Fig. 24 and may include a plurality of antennas (e.g., an antenna for a wireless LAN and an antenna for a close-proximity wireless communication system). In that case, the antenna switch 914 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 913, and the auxiliary controller 919 to one another.

The battery 918 supplies power to each block of the smartphone 900 shown in Fig. 24 via a power supply line partially indicated by a dashed line in the figure. The auxiliary controller 919 causes minimum necessary functions of the smartphone 900 to operate in a sleep mode, for example.

In the smartphone 900 shown in Fig. 24, for example, the wireless communication unit 110, the communication control unit 111, and the control unit 130 shown in Fig. 2, the wireless communication unit 210, the communication control unit 211, and the control unit 230 shown in Fig. 3, and the wireless communication unit 310, the communication control unit 311, and the control unit 330 shown in Fig. 17 may be implemented in the wireless communication interface 913. Furthermore, at least some of these functions may be implemented in the processor 901 or the auxiliary controller 919.

It is noted that the smartphone 900 may operate as a wireless AP (software AP) by the processor 901 executing an AP function at an application level. Further, the wireless communication interface 913 may have a wireless AP function.

Furthermore, the smartphone 900 may include a biometric authentication unit (fingerprint authentication, hand geometry authentication, voice authentication, blood vessel authentication, face authentication, iris authentication, retina authentication). In that case, the wireless communication interface 913 in which the wireless communication unit 110, the communication control unit 111, and the control unit 130 shown in Fig. 2, the wireless communication unit 210, the communication control unit 211, and the control unit 230 shown in Fig. 3, and the wireless communication unit 310, the communication control unit 311, and the control unit 330 shown in Fig. 17 are implemented is configured to receive supply of power from the same battery 918 as at least one of the display device 910, the speaker 911, or the biometric authentication unit.

Furthermore, in the smartphone 900, information is displayed from at least one of the display device 910 or the speaker 911 based on communication with an external device by the wireless communication interface 913. At that time, information related to the present technology may be output from at least one of the display device 910 or the speaker 911, as the information.

### <Configuration example of in-vehicle device>

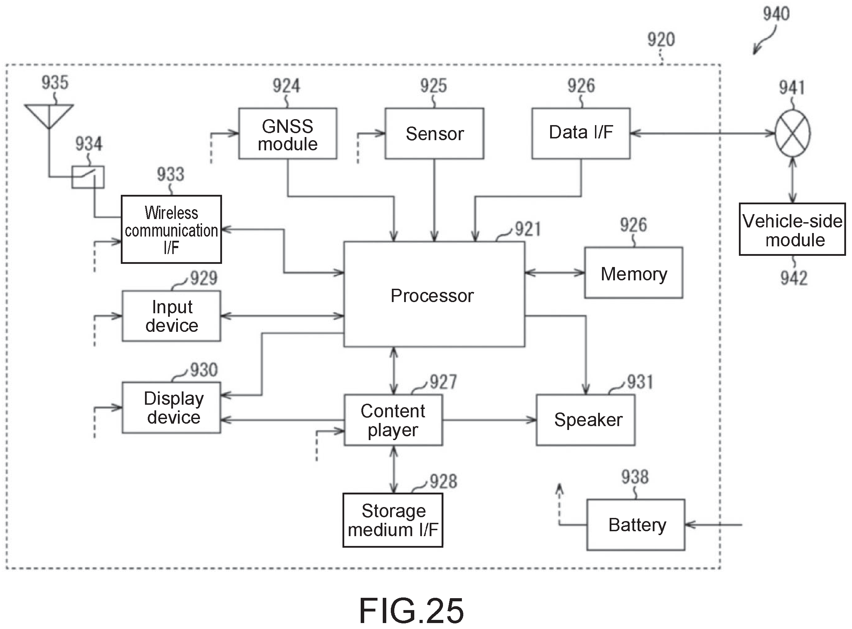

Fig. 25 is a block diagram showing a schematic configuration example of an in-vehicle device 920 to which the present technology is applied.

The in-vehicle device 920 is configured to include a processor 921, a memory 922, a GNSS (Global Navigation Satellite System) module 924, a sensor 925, a data interface 926, a content player 927, and a storage medium interface 928. The in-vehicle device 920 is also configured to include an input device 929, a display device 930, a speaker 931, a wireless communication interface 933, an antenna switch 934, an antenna 935, and a battery 938.

The processor 921 may be, for example, a CPU or a SoC, and controls a navigation function and other functions of the in-vehicle device 920. The processor 921 can also control a driving system of the vehicle, such as a brake, an accelerator, or steering, based on information obtained through the communication that is based on the present technology.

The memory 922 includes a RAM and a ROM and stores programs to be executed by the processor 921 and data.

The GNSS module 924 measures a position (e.g., latitude, longitude, and altitude) of the in-vehicle device 920 using GNSS signals received from a GNSS satellite.

The sensor 925 includes, for example, a sensor group including a gyro sensor, a geomagnetic sensor, an air pressure sensor, and the like.

The data interface 926 is connected to an in-vehicle network 941 via a terminal (not shown), for example, and acquires data generated on the vehicle side, such as in-vehicle data.

The content player 927 reproduces content stored in a storage medium (e.g., a CD or a DVD) inserted into the storage medium interface 928.

The input device 929 includes, for example, a touch sensor that detects a touch on a screen of the display device 930, a button, a switch, or the like, and accepts operations or information input from the user.

The display device 930 includes a screen such as an LCD or an OLED display, and displays images of a navigation function or content to be reproduced.

The speaker 931 outputs audio of the navigation function or the content to be reproduced.

It is noted that the navigation function and/or the function of the content player 927 are optional in the in-vehicle device 920. The navigation function and/or the content player 927 may be removed from the configuration of the in-vehicle device 920.

The wireless communication interface 933 supports one or more wireless LAN standards such as IEEE802.11a, 11b, 11g, 11n, 11ac, 11ad, 11ax, 11ay, 11be, and 11bn, and executes wireless communication. The wireless communication interface 933 communicates with other devices via a wireless LAN AP in an infrastructure mode. The wireless communication interface 933 also communicates directly with other devices in an ad hoc mode or a direct communication mode such as Wi-Fi Direct.

The wireless communication interface 933 typically includes a baseband processor, an RF circuit, a power amplifier, and the like. The wireless communication interface 933 may be a one-chip module in which a memory that stores a communication control program, a processor that executes the program, and related circuits are integrated. In addition to the wireless LAN system, the wireless communication interface 933 may support other types of wireless communication systems such as a near field communication system, a close-proximity wireless communication system, and a cellular communication system.

The antenna switch 934 switches a connection destination of the antenna 935 between a plurality of circuits included in the wireless communication interface 933.

The antenna 935 includes one or a plurality of antenna elements and is used for transmission and reception of radio signals by the wireless communication interface 933.

It is noted that the in-vehicle device 920 is not limited to the example shown in Fig. 25 and may include a plurality of antennas 935. In that case, the antenna switch 934 may be omitted from the configuration of the in-vehicle device 920.

The battery 938 via a power supply line partially indicated by a dashed line in the figure. In the in-vehicle device 920 shown in Fig. 25, for example, the wireless communication unit 110, the communication control unit 111, and the control unit 130 shown in Fig. 2, the wireless communication unit 210, the communication control unit 211, and the control unit 230 shown in Fig. 3, and the wireless communication unit 310, the communication control unit 311, and the control unit 330 shown in Fig. 17 may be implemented in the wireless communication interface 933. Furthermore, at least some of these functions may be implemented in the processor 921.

Further, the wireless communication interface 933 may operate as the base station (wireless communication device) 100, the terminal device (wireless communication device) 200, or the rendering device (wireless communication device) 300 described above to provide a wireless connection to a terminal owned by the user in the vehicle.

Moreover, the present technology may be realized as an in-vehicle system (or vehicle) 940 including one or more blocks of the in-vehicle device 920 described above, an in-vehicle network 941, and a vehicle-side module 942. The vehicle-side module 942 generates vehicle-side data including a vehicle speed, an engine rotation speed, failure information, or the like, and outputs the generated data to the in-vehicle network 941.

### <Configuration example of wireless AP>

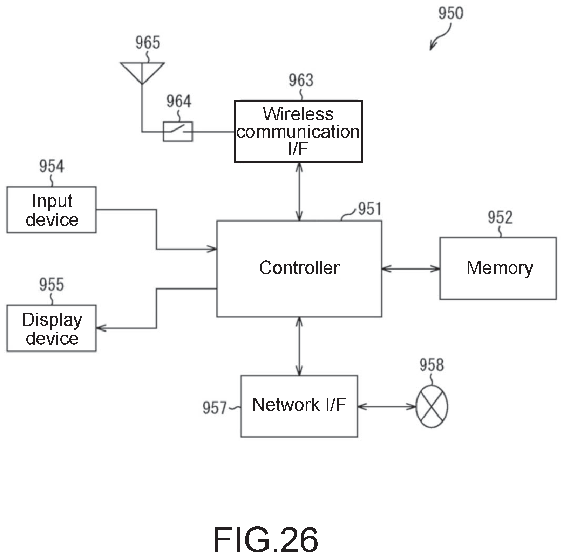

Fig. 26 is a block diagram showing a schematic configuration example of a wireless AP 950 to which the present technology is applied.

The wireless AP 950 includes a controller 951, a memory 952, an input device 954, a display device 955, a network interface 957, a wireless communication interface 963, an antenna switch 964, and an antenna 965.

The controller 951 may be, for example, a CPU or a DSP (Digital Signal processor), and causes various functions of an IP (Internet Protocol) layer and high-order layers of the wireless AP 950 (e.g., access restriction, routing, encryption, firewall, log management, and the like) to operate.

The memory 952 includes a RAM and a ROM, and stores programs to be executed by the controller 951 and various types of control information (e.g., a terminal list, a routing table, an encryption key, security settings, logs, and the like).

The input device 954 includes, for example, a button, a switch, and the like, and accepts operations from the user.

The display device 955 includes an LED lamp and/or the like and displays an operation status of the wireless AP 950.

The network interface 957 is a wired communication interface for connecting the wireless AP 950 to a wired communication network 958. The network interface 957 may include a plurality of connection terminals. The wired communication network 958 may be a LAN such as the Ethernet^{®}, or may be a WAN (Wide Area Network).

The wireless communication interface 963 supports one or more wireless LAN standards such as IEEE802.11a, 11b, 11g, 11n, 11ac, 11ad, 11ax, 11ay, and 11be, and provides a wireless connection as an AP to nearby terminals.

The wireless communication interface 963 typically includes a baseband processor, an RF circuit, a power amplifier, and the like.

The wireless communication interface 963 may be a one-chip module in which a memory that stores a communication control program, a processor that executes the program, and related circuits are integrated.

The antenna switch 964 switches a connection destination of the antenna 965 between a plurality of circuits included in the wireless communication interface 963. The antenna 965 includes one or a plurality of antenna elements and is used for transmission and reception of radio signals by the wireless communication interface 963.

In the wireless AP 950 shown in Fig. 26, for example, the wireless communication unit 110, the communication control unit 111, and the control unit 130 shown in Fig. 2, the wireless communication unit 210, the communication control unit 211, and the control unit 230 shown in Fig. 3, and the wireless communication unit 310, the communication control unit 311, and the control unit 330 shown in Fig. 17 may be implemented in the wireless communication interface 963. Furthermore, at least some of these functions may be implemented in the controller 951.

It is noted that the embodiments described above have shown the example of embodying the present technology, and the matters in the embodiments have a correspondence relationship with the matters specifying the invention in the scope of claims. Similarly, the matters specifying the invention in the scope of claims have a correspondence relationship with the matters in the embodiments of the present technology having the same names. However, the present technology is not limited to the embodiments and can be embodied by variously modifying the embodiments without departing from the gist of the present technology.

Furthermore, the processing procedures described in the embodiments described above may be regarded as a method including a series of these procedures, or may be regarded as a program for causing this computer to execute the series of procedures or a recording medium that stores the program.

As this recording medium, for example, a CD (Compact Disc), an MD (MiniDisc), a DVD (Digital Versatile Disc), a memory card, a Blu-ray disc (Blu-ray^{®} Disc), or the like can be used.

It is noted that in the present specification, the system refers to an aggregation of a plurality of constituent elements (devices, modules (components), and the like), and whether or not all of the constituent elements are within the same housing is irrelevant. Therefore, a plurality of devices that are housed in separate housings and are connected via a network and a single device in which a plurality of modules are housed in a single housing are both systems.

Moreover, the effects described in the present specification are mere examples and are not limited, and other effects may also be exerted.

The embodiment of the present technology is not limited to the embodiments described above, and can be variously modified without departing from the gist of the present technology.

For example, the present technology may take a configuration of cloud computing in which a plurality of devices share and cooperate to process one function via a network.

Moreover, the respective steps described above in the flowcharts may be executed by a single device, or may be shared by a plurality of devices to be executed.

In addition, when a plurality of processing is included in a single step, the plurality of processing included in the single step may be executed by a single device, or may be shared by a plurality of devices to be executed.

It is noted that the present technology can also take the following configurations.

### [Notes]

### [Item 1]

A communication control device, including:
a control unit which controls a communication unit which communicates with a wireless communication device, in which
the control unit performs control of
acquiring, via the communication unit, first information that is transmitted from the wireless communication device and indicates a first period as a priority period during which transmission of a specific type of data is prioritized,
acquiring, via the communication unit, second information that is transmitted from the wireless communication device and is used for setting the priority period to a second period shorter than the first period, and
setting the priority period to the second period on the basis of the first information and the second information.

### [Item 2]

The communication control device according to item 1, in which
the second period is a part of the first period.

### [Item 3]

The communication control device according to item 1 or 2, in which
the control unit performs control of acquiring the first information from a beacon signal that is transmitted from the wireless communication device and received by the communication unit.

### [Item 4]

The communication control device according to any one of items 1 to 3, in which
the control unit transmits capability information indicating that the communication control device has a capability to set the second period to the wireless communication device via the communication unit, and acquires the second information transmitted from the wireless communication device in accordance with the capability information.

### [Item 5]

The communication control device according to any one of items 1 to 4, in which
the second information includes an offset value from a start time of the first period and a period length that starts from a time indicated by the offset value, and the second period is a period having a length indicated by the period length from the time indicated by the offset value.

### [Item 6]

The communication control device according to item 5, in which
the first information indicates a plurality of the first periods arranged with intervals in a time direction, and
the second information includes, as the offset value of the second period corresponding to the first period, a value that increases along with a progression in the time direction.

### [Item 7]

The communication control device according to any one of items 1 to 6, in which
the control unit performs control of setting to a Wake state during the second period and setting to a Doze state during at least a partial period of the first period excluding the second period.

### [Item 8]

The communication control device according to item 7, in which
the control unit acquires the first information from a first frame received by the communication unit, and acquires the second information from a second frame received by the communication unit after receiving the first frame,
the first information in the first frame includes information related to a timing at which the second frame is transmitted, and
the control unit performs control of setting to the Doze state after acquiring the first information, and thereafter setting to the Wake state in accordance with the timing at which the second frame is transmitted.

### [Item 9]

The communication control device according to any one of items 1 to 8, in which
the control unit transmits a first request signal related to the first period to the wireless communication device via the communication unit and transmits a second request signal related to the second period to the wireless communication device via the communication unit, to cause the wireless communication device to transmit the first information and the second information.

### [Item 10]

The communication control device according to any one of items 1 to 9, in which
the priority period is an occupancy period for the transmission of the specific type of data.

### [Item 11]

The communication control device according to any one of items 1 to 10, in which
the control unit sets the first period as the priority period on the basis of the first information, and adjusts the priority period from the first period to the second period on the basis of the second information.

### [Item 12]

The communication control device according to any one of items 1 to 11, in which
the communication unit is connected to the wireless communication device via a first link and a second link, and
the control unit receives the first information via one of the first link or the second link, and receives the second information via another one of the first link or the second link.

### [Item 13]

A communication control device, including:
a control unit which controls a communication unit which communicates with a plurality of wireless communication devices, in which
the control unit performs control of transmitting, to the plurality of wireless communication devices, first information indicating a first period as a priority period during which transmission of a specific type of data is prioritized, and transmitting, to at least one target wireless communication device out of the plurality of wireless communication devices, second information used for setting the priority period to a second period shorter than the first period.

### [Item 14]

The communication control device according to item 13, in which
the second occupancy period is a part of the first occupancy period.

### [Item 15]

The communication control device according to item 13 or 14, in which
the control unit performs control of transmitting a beacon signal including the first information.

### [Item 16]

The communication control device according to any one of items 13 to 15, in which
capability information indicating whether or not a device has a capability to set the second period is acquired from the plurality of wireless communication devices, and
the target wireless communication device is the wireless communication device having the capability.

### [Item 17]

The communication control device according to any one of items 13 to 16, in which
the second information includes an offset value from a start time of the first period and a period length from a time indicated by the offset value, and the second period is a period having a length indicated by the period length from the time indicated by the offset value.

### [Item 18]

The communication control device according to item 17, in which
the first information sets a plurality of the first periods arranged with intervals in a time direction, and
the second information sets the offset value of the second period corresponding to the first period to become larger along with a progression in the time direction.

### [Item 19]

The communication control device according to any one of items 13 to 18, in which
the control unit selectively executes either
a first operation of transmitting a first frame including the first information and transmitting a second frame including the second information after transmitting the first frame, or
a second operation of transmitting a third frame including the first information and the second information.

### [Item 20]

The communication control device according to item 19, in which
the control unit performs control of acquiring the data from a data generation device which generates the data, and transmitting the acquired data to one of the target wireless communication devices from the communication unit within the second period, and
the control unit
executes the first operation in a case where a time at which the data can be acquired cannot be predicted before the transmission of the first information, and
executes the second operation in a case where the time at which the data can be acquired can be predicted before the transmission of the first information.

### [Item 21]

The communication control device according to item 19 or 20, in which
the first information in the first frame includes information related to a timing at which the second frame is transmitted.

### [Item 22]

The communication control device according to any one of items 13 to 21, in which
the control unit performs control of transmitting the first information and the second information as a response to a request signal received from one of the plurality of wireless communication devices.

### [Item 23]

The communication control device according to any one of items 13 to 22, in which
the control unit performs control of acquiring the data from the data generation device which generates the data, and transmitting the acquired data to one of the target wireless communication devices from the communication unit within the second period, and
the control unit acquires estimation information of a generation completion time of the data from the data generation device, and determines the second period on the basis of the estimation information.

### [Item 24]

The communication control device according to item 23, in which
the control unit is connected to the data generation device via a communication network, and determines the second period further on the basis of a transmission delay amount of the communication network.

### [Item 25]

The communication control device according to any one of items 13 to 24, in which
the control unit is connected to the data generation device via the communication network, and determines the second period further on the basis of the transmission delay amount of the communication network.

### [Item 26]

The communication control device according to any one of items 13 to 25, in which
the communication unit is connected to the plurality of wireless communication devices via one of a first link or a second link, and is connected to at least the target wireless communication device via another one of the first link or the second link, and
the control unit transmits the first information via the one of the links, and transmits the second information via the another one of the links.

### [Item 27]

A communication control method, including:
acquiring first information that is transmitted from a wireless communication device and indicates a first period as a priority period during which transmission of a specific type of data is prioritized;
acquiring second information that is transmitted from the wireless communication device and is used for setting the priority period to a second period shorter than the first period; and
setting the priority period to the second period on the basis of the first information and the second information.

### [Item 28]

A computer program for causing a computer to execute the steps of:
acquiring first information that is transmitted from a wireless communication device and indicates a first period as a priority period during which transmission of a specific type of data is prioritized;
acquiring second information that is transmitted from the wireless communication device and is used for setting the priority period to a second period shorter than the first period; and
setting the priority period to the second period on the basis of the first information and the second information.

### [Item 29]

A communication control method for controlling communication with a plurality of wireless communication devices, including:
transmitting, to the plurality of wireless communication devices, first information indicating a first period as a priority period during which transmission of a specific type of data is prioritized; and
transmitting, to at least one target wireless communication device out of the plurality of wireless communication devices, second information used for setting the priority period to a second period shorter than the first period.

### [Item 30]

A computer program for causing a computer to execute the steps of:
transmitting, to a plurality of wireless communication devices, first information indicating a first period as a priority period during which transmission of a specific type of data is prioritized; and
transmitting, to at least one target wireless communication device out of the plurality of wireless communication devices, second information used for setting the priority period to a second period shorter than the first period.

### Reference Signs List

1 to 3, x STA device
150, 250, 350 antenna
100 AP device (Access Point, base station, wireless communication device)
110, 210, 310 wireless communication unit
111, 211, 311 communication control unit
112, 212, 312 communication storage unit
121, 221, 321 data processing unit
122, 222, 322 signal processing unit
123, 223, 323 wireless interface unit
124, 224, 324 amplifier unit
130, 230, 330 control unit
140, 240, 340 storage unit
160 backhaul communication unit
200 terminal device (wireless communication device)
300 rendering device (wireless communication device)
360 video generation unit
500 backhaul network
804 bus
805 input/output interface
806 input unit
807 output unit
808 storage unit
809 communication unit
810 drive
811 removable medium
900 smartphone
901 processor
902 memory
903 storage
904 external connection interface
906 camera
907 sensor
908 microphone
909 input device
910 display device
911 speaker
913 wireless communication interface
914 antenna switch
915 antenna
917 bus
918 battery
919 auxiliary controller
920 in-vehicle device
921 processor
922 memory
924 GNSS module
925 sensor
926 data interface
927 content player
928 storage medium interface
929 input device
930 display device
931 speaker
933 wireless communication interface
934 antenna switch
935 antenna
938 battery
940 in-vehicle system (or vehicle)
941 in-vehicle network
942 vehicle-side module
951 controller
952 memory
954 input device
955 display device
957 network interface
958 wired communication network
963 wireless communication interface
964 antenna switch
965 antenna

## Claims

1. A communication control device, comprising:
a control unit which controls a communication unit which communicates with a wireless communication device, wherein
the control unit performs control of
acquiring, via the communication unit, first information that is transmitted from the wireless communication device and indicates a first period as a priority period during which transmission of a specific type of data is prioritized,
acquiring, via the communication unit, second information that is transmitted from the wireless communication device and is used for setting the priority period to a second period shorter than the first period, and
setting the priority period to the second period on a basis of the first information and the second information.

2. The communication control device according to claim 1, wherein
the second period is a part of the first period.

3. The communication control device according to claim 1, wherein
the control unit performs control of acquiring the first information from a beacon signal that is transmitted from the wireless communication device and received by the communication unit.

4. The communication control device according to claim 1, wherein
the control unit transmits capability information indicating that the communication control device has a capability to set the second period to the wireless communication device via the communication unit, and acquires the second information transmitted from the wireless communication device in accordance with the capability information.

5. The communication control device according to claim 1, wherein
the second information includes an offset value from a start time of the first period and a period length that starts from a time indicated by the offset value, and the second period is a period having a length indicated by the period length from the time indicated by the offset value.

6. The communication control device according to claim 5, wherein
the first information indicates a plurality of the first periods arranged with intervals in a time direction, and
the second information includes, as the offset value of the second period corresponding to the first period, a value that increases along with a progression in the time direction.

7. The communication control device according to claim 1, wherein
the control unit performs control of setting to a Wake state during the second period and setting to a Doze state during at least a partial period of the first period excluding the second period.

8. The communication control device according to claim 7, wherein
the control unit acquires the first information from a first frame received by the communication unit, and acquires the second information from a second frame received by the communication unit after receiving the first frame,
the first information in the first frame includes information related to a timing at which the second frame is transmitted, and
the control unit performs control of setting to the Doze state after acquiring the first information, and thereafter setting to the Wake state in accordance with the timing at which the second frame is transmitted.

9. The communication control device according to claim 1, wherein
the control unit transmits a first request signal related to the first period to the wireless communication device via the communication unit and transmits a second request signal related to the second period to the wireless communication device via the communication unit, to cause the wireless communication device to transmit the first information and the second information.

10. The communication control device according to claim 1, wherein
the priority period is an occupancy period for the transmission of the specific type of data.

11. The communication control device according to claim 1, wherein
the control unit sets the first period as the priority period on the basis of the first information, and adjusts the priority period from the first period to the second period on the basis of the second information.

12. The communication control device according to claim 1, wherein
the communication unit is connected to the wireless communication device via a first link and a second link, and
the control unit receives the first information via one of the first link or the second link, and receives the second information via another one of the first link or the second link.

13. A communication control method,
comprising:
acquiring first information that is transmitted from a wireless communication device and indicates a first period as a priority period during which transmission of a specific type of data is prioritized;
acquiring second information that is transmitted from the wireless communication device and is used for setting the priority period to a second period shorter than the first period; and
setting the priority period to the second period on a basis of the first information and the second information.

14. A computer program for causing a computer to execute the steps of:
acquiring first information that is transmitted from a wireless communication device and indicates a first period as a priority period during which transmission of a specific type of data is prioritized;
acquiring second information that is transmitted from the wireless communication device and is used for setting the priority period to a second period shorter than the first period; and
setting the priority period to the second period on a basis of the first information and the second information.
